Europäisches Patentamt

European Patent Office

Office européen des brevets

(11) Veröffentlichungsnummer: **0 241 802**
**A2**

(12) **EUROPÄISCHE PATENTANMELDUNG**

(21) Anmeldenummer: **87104726.2**

(22) Anmeldetag: **31.03.87**

(51) Int. Cl.⁴: **C05F 9/02**

(30) Priorität: **02.04.86 DE 3611046**

(43) Veröffentlichungstag der Anmeldung:
**21.10.87 Patentblatt 87/43**

(84) Benannte Vertragsstaaten:
**AT BE CH DE FR GB IT LI LU NL SE**

(71) Anmelder: **Nockemann, Otto**
**Homertskamp 10**
**D-5270 Gummersbach 1(DE)**

(72) Erfinder: **Kipke, Winfried**
**Bohnenkampstrasse 33**
**D-4500 Osnabrück(DE)**
Erfinder: **Nockemann, Otto**
**Homertskamp 10**
**D-5270 Gummersbach 1(DE)**
Erfinder: **Philipp, Friedrich**
**Am Kattenbusch 26**
**D-5608 Radevormwald(DE)**

(54) **Verrottungs- und Wärmegewinnungsanlage für organische Abfallprodukte.**

(57) Zur schnellen Verrottung werden organische Abfallprodukte, wie tierische Fäkalien, Pflanzenabfälle und dergleichen, in geschlossene, schrägliegende Schächte eingebracht, hier aufgelockert und von im Kreislauf umwälzender Prozeßluft mit ständig ergänztem Sauerstoffanteil versehen.

Damit eine angepaßte Steuerung des Prozesses für jeden Schacht ermöglicht ist, wird das zuzuführende frische Rottegut separat und dosiert jedem Schacht eingegeben und ist auch demselben gesondert zu entnehmen. Die Prozeßluft wird entweder seitlich in den freien Raum 33 des Mischwinkels 27 eingeblasen oder den Mischwinkeln über Leitungen zugeführt. Hierbei können der oberhalb des Rottegutes 15 abgesaugten Prozeßluft vor dem Wiedereinblasen entsprechende Wärmemengen entnommen oder zugeführt werden, um die Temperatur des Verrottungsprozesses zu steuern.

Fig.1

### Verrottungs-und Wärmegewinnungsanlage für organische Abfallprodukte

Die Erfindung betrifft eine Verrottungs-und Wärmegewinnungsanlage für organische Abfallprodukte, wie tierische Fäkalien aller Art, menschliche Exkremente und sonstige organische Abfälle, die in schütt-und gasaustauschfähiger Struktur vorliegen bzw. in eine solche gebracht werden und bei der diese infolge ihrer Schwerkraft selbsttätig - schrägliegende Schächte durchlaufen und durch intervallmäßig wirkende Auflockerung durchgemischt werden, wobei eine im Kreislauf umgewälzte Prozeßluft eingesetzt wird.

Gemische von Gülle, wie sie in der Rinder-oder Schweinehaltung anfallen, von verdünntem Geflügelkot bzw. menschlichen Exkrementen oder dergleichen, vermischt mit zerkleinertem Stroh bzw. sonstigem organischen Material, werden von oben geschlossenen und vorzugsweise wärmeisolierten Anlagen zugeführt, wobei diese Gemische zur aeroben Verrottung von der Prozeßluft im Kreislauf bedarfsweise durchströmt werden und die überschüssigen Wärmeenergiemengen des exothermen Verrottungsprozesses zur Prozeßtemperaturregelung zu Heiz-oder Trockenzwecken abgeführt werden können.

Bei Ausbringung von Gülle, Geflügelkot oder dergleichen auf die Felder im nicht verrotteten Zustand gehen die löslichen Düngerstoffe, insbesondere die in ihnen enthaltenen Stickstoffverbindungen, zum größten Teil ins Grundwasser und reichern dieses in nicht zulässiger Weise mit sich hieraus entwickelndem Nitrat an. Insbesondere in den vegetationsarmen Jahreszeiten gehen hierdurch 80 bis 95 % der Düngerstoffe verloren, und selbst in den wachstumsstarken Jahreszeiten liegt dieser Verlust immer noch zwischen 30 bis 50 %, je nach den Witterungsbedingungen und der Ausbringungsmenge, bezogen auf die Flächengrößen sowie den Bewuchs.

Außerdem können oft die landwirtschaftlichen Betriebe und sonstige Anstalten, insbesondere die der Massentierhaltung, die anfallenden organischen Massen, wie Stroh, Gemüse-oder Obstabfälle (Trestern), nicht voll verwerten, so daß diese ebenfalls wertvollen Substanzen in vielen Fällen ungenutzt bleiben bzw. im Gegenteil auch noch Lagerstätten, wie Mülldeponien oder dergleichen, belasten und hier infolge der Gefahr der Selbstentzündung oft eine Brandursache darstellen.

Bekannte Anlagen dieser Art weisen insbesondere im Hinblick auf eine störungsfreie Gutein-und Gutausbringung und auf eine gleichmäßige Luftdurchströmung eine Reihe von Nachteilen auf. So werden die einzelnen Schächte auf einfache Weise nicht ausreichend gleichmäßig befüllt und die Ausbringung des fertig verrotteten Gutes ist durch die hierfür vorgesehene einzige Einrichtung von Schacht zu Schacht sehr unterschiedlich. Die Einmischwinkel tragen Gutmengen in den dahinterliegenden Schacht, und die Prozeßluft durchfließt nicht ausreichend gleichmäßig das Rottegut, da sie nicht zwangsläufig zugeführt wird (DE-OS 32 04 471.2-41), oder die Leitungsmündungen der Prozeßluft auf den Böden werden durch das Darübergleiten der Mischwinkel verstopft. Außerdem sind derartige Einrichtungen zur Einbringung der Prozeßluft zu aufwendig (DE-OS 34 20 732)

Bei bekannten Kompostierungstürmen für Müll (DE-AS 1301 828) wird das Gut von oben eingebracht, und es sinkt entsprechend der unteren Entnahme nach und nach ab. Über im Gutraum senkrecht und verteilt angeordnete Verteilungsrohre wird die Prozeßluft eingedrückt, die dann oberhalb des Gutes ins Freie tritt. Hierbei ist es nachteilig, daß das Material als hoher Stapel aufeinander liegt, hierdurch verdichtet, dadurch schwer luftdurchlässig wird und zudem nicht gelockert werden kann. Hinzu kommt noch der Nachteil, daß das in die Prozeßluft eingetretene gasförmige Ammoniak nicht verwertet wird, sondern vielmehr die Umwelt belastet und auch die in der Prozeßluft befindlichen Wärmeenergiemengen sowie die überschüssigen innerhalb des Turms nicht genutzt werden können.

Eine Kompostierungsvorrichtung (DE-OS 2 053 610) weist eine Vielzahl von Verrottungskammern,übereinander angeordnet, in einem sehr hohen Gehäuse auf, wobei der Hausmüll von oben eingeführt wird, der dann nach und nach über umfangreiche Einrichtungen die einzelnen Kammern bis zum Boden durchlaufen soll. Hierbei sollen alle Parameter, wie Drehzahl der Flügel, der Feuchtigkeitsgehalt des Gutes, der Luftdurchsatz, die Zeitdauer des Abbauprozesses einer jeden Kammer, nach Ermittlung der physikalischen und chemischen Werte zum Erreichen eines optimalen Prozeßablaufes ständig verändert werden, um eine Anpassung an die jeweilige Tageszusammensetzung der eingegebenen Hausmüllportionen zu ermöglichen. Diese Vorrichtung ist aber nicht funktionstüchtig und wäre auch zu aufwendig und damit zu unwirtschaftlich. So ist es beispielsweise unmöglich, durch eine Entleerungsöffnung 15 das Gut durch die umrührenden Flügel 18 von einer in die andere Kammer zu befördern, wie auch die Einstellung auf die Zusammensetzung einer Müllportion nicht möglich ist, da jede Portion für sich oft große Unterschiede in der Zusammensetzung aufweist. Außerdem würden die starken Umwälzungen und Vermischungen eine zu hohe Störung des Verrottungsprozesses verursachen, wodurch dieser verlangsamt wird und unvollständig abläuft. Auch hier wäre eine Ausnutzung der Düngerstoffe in der Prozeßluft sowie eine Verwertung der überschüssigen Wärmeenergiemengen ausgeschlossen.

Der Erfindung liegt die Aufgabe zugrunde, Vorschläge zu unterbreiten, die diese Nachteile vermeiden, so daß insbesondere bei einer Verrottungsanlage mit schrägliegenden Schächten, bei der das Gut von einer Mischwinkel-Einrichtung durch Überstreichen des Schachtbodens aufgelockert wird, ohne daß auf diese Teile unvorhersehbare überhöhte Kräfte einwirken können, das Rottegut gleichmäßig und in der optimalen Konsistenz und Menge für jeden Schacht eingebracht und auch je Schacht in erforderlicher Weise einzeln entnommen werden kann, ferner daß einfache, gesicherte und gleichmäßige Zwangsdurchströmungen des Rottegutes durch die Prozeßluft erreicht werden. Außerdem ist die Möglichkeit zu schaffen, die Prozeßtemperatur durch Erhitzen oder Abkühlen der Prozeßluft zu steuern.

Diese Aufgabe wird erfindungsgemäß im wesentlichen dadurch gelöst, daß jedem Schacht das einzubringende frische Rottegut separat und dosiert zugeführt wird, entweder in aufbereitetem, vermischtem Zustand oder durch gleichzeitiges zusammenbringendes Einblasen und Einspritzen der organischen bzw. flüssigen Bestandteile, wie gemahlenem Stroh und der Gülle, oberhalb eines jeden Schachtbereiches, daß für jeden Schacht eine eigene Gutaustrageeinrichtung vorgesehen ist, daß die Prozeßluft entweder seitlich in den freien Raum der Mischwinkel hinter deren Vorderwand oder über Leitungen bei an Schwenkeinrichtungen angeschlossenen Mischwinkelprofilen in das Rottegut eingeblasen wird und daß mit der oberhalb des Rottegutes abgesaugten Prozeßluft die Temperatur im Rottestapel durch Entnahme oder Zuführung von Wärmeenergiemengen geregelt wird.

Die Erfindung wird durch die Patentansprüche im Zusammenhang mit der Zeichnung und der Beschreibung zu dieser näher beschrieben bzw. erläutert.

Die mit der Erfindung erzielten Vorteile bestehen insbesondere darin, daß bei Verrottungsanlagen der beschriebenen Art für den Abbauprozeß und die Behandlung des Rottegutes bestimm-und regelbare Bedingungen und Behandlungen, wie exakte Ein-und Ausbringung des Rottegutes, angepaßte Auflockerung desselben sowie Zwangseinbringung der Prozeßluft zur gleichmäßigen Durchdringung des Rottestapels, ermöglicht sind. Weiter ist es günstig, daß die Höhe der Rottegutstapel durch die freie untere Umkehrung der Mischwinkel bzw. die Anwendung von Mischwinkelprofilen an hochbelastbaren Gestängen wesentlich vergrößert werden kann, womit die Anzahl der Schächte verringerbar ist.

In der Zeichnung sind Ausführungsbeispiele überwiegend schematisch dargestellt, es zeigen

Fig. 1 einen Längsquerschnitt durch eine zweischächtige Heiß-Verrottungs-und Wärmegewinnungsanlage gemäß der Erfindung,

Fig. 2 einen Schnitt gemäß der Linie A - A nach Fig. 1 mit teils zusätzlich auf-bzw. abgebrochen dargestellten Bereichen,

Fig. 3 einen Schnitt gemäß der Linie B - B nach Fig. 1, mit Sonder-Ausschnitt gemäß der Abgrenzungslinie W sowie Fig. 4 einen Teilquerschnitt der äußeren Wandpartie nach der Linie C - C gemäß Fig. 1 im vergrößerten Maßstab,

Fig. 5 eine Einzelheit eines in der Wirkhöhe verstellbaren Mischwinkels in seiner oberen Position vor dem Wenden nach der Schnittlinie D - D in Fig. 6,

Fig. 6 einen Schnitt gemäß der Linie E - E nach Fig. 5,

Fig. 7 einen Teilquerschnitt nach der Linie F - F in Fig. 1 der äußeren Wandpartie,

Fig. 8 einen Teilquerschnitt nach der Linie F - F in Fig. 1 mit besonderer Ausbildung der Prozeßluftzuführung,

Fig. 9 eine Einzelheit im vergrößerten Maßstab eines besonders ausgebildeten Mischwinkels,

Fig. 10 eine Schnittdarstellung des oberen Bereichs eines erfinderischen Bodens in besonderer Ausgestaltung gemäß der Linie G - G nach Fig. 11,

Fig. 11 einen Schnitt gemäß der Linie H - H nach Fig. 10,

Fig. 12 einen Schnitt gemäß der Linie J - J nach Fig. 10,

Fig. 13 eine Einzelheit mit verändertem Mischwinkel gemäß der Schnittlinie K - K nach Fig. 14,

Fig. 14 einen Schnitt gemäß der Linie L - L nach Fig. 13,

Fig. 15 eine Ansicht in Richtung X nach Fig. 12,

Fig. 16 einen Schnitt gemäß der Linie M - M nach Fig. 15,

Fig. 17 einen Längsquerschnitt durch den Erfindungsgegenstand, bei dem ein Mischwinkel von einem oberhalb des Gutes zurückgeführten Kettenantrieb bewegt wird, in zur Verkürzung herausgebrochener Darstellung,

Fig. 18 einen Schnitt gemäß der Linie N - N nach Fig. 17,

Fig. 19 einen Längsquerschnitt durch einen gesamten Erfindungsgegenstand, bei dem ein Mischwinkel an Außenwangen angeordnet ist, die -

schwenkbar an einer Verfahreinrichtung befestigt sind, die an der Decke eines Schachtes vorgesehen ist,

Fig. 20 eine Draufsicht gemäß Fig. 19, teils aufgebrochen dargestellt,

Fig. 21 einen Querschnitt gemäß der Linie 0 - 0 nach Fig. 19,

Fig. 22 einen Teilschnitt gemäß der Linie P - P nach Fig. 19, und die Figuren 23 und 24 solche gemäß der Linie Q-Q nach Figur 21,

Fig. 25 einen Teilquerschnitt durch eine Verrottungsanlage mit einer Mischwinkeleinrichtung für mehrere Schächte und Fig. 26 einen Teilquerschnitt gemäß der Linie R-R nach Figur 25.

Fig. 27 einen Schnitt durch einen Einfüll-und Sammelschacht für das Rottegut nach der Linie T-T gemäß Fig. 28 und Fig. 28 ein solcher nach der Linie S-S der Fig. 27,

Fig. 29 einen Teilquerschnitt einer Verrottungsanlage, die von einem Sammel-und Beschickungsbehälter gefüllt wird

Fig. 30 einen Ausschnitt, bei dem der untere Abschlußboden nachgiebig ausgeführt ist,

Fig. 31 und 32 Teilschnitt und Draufsicht einer Gutbeschickung durch Einblasen bzw.-sprizen der Stoffe.

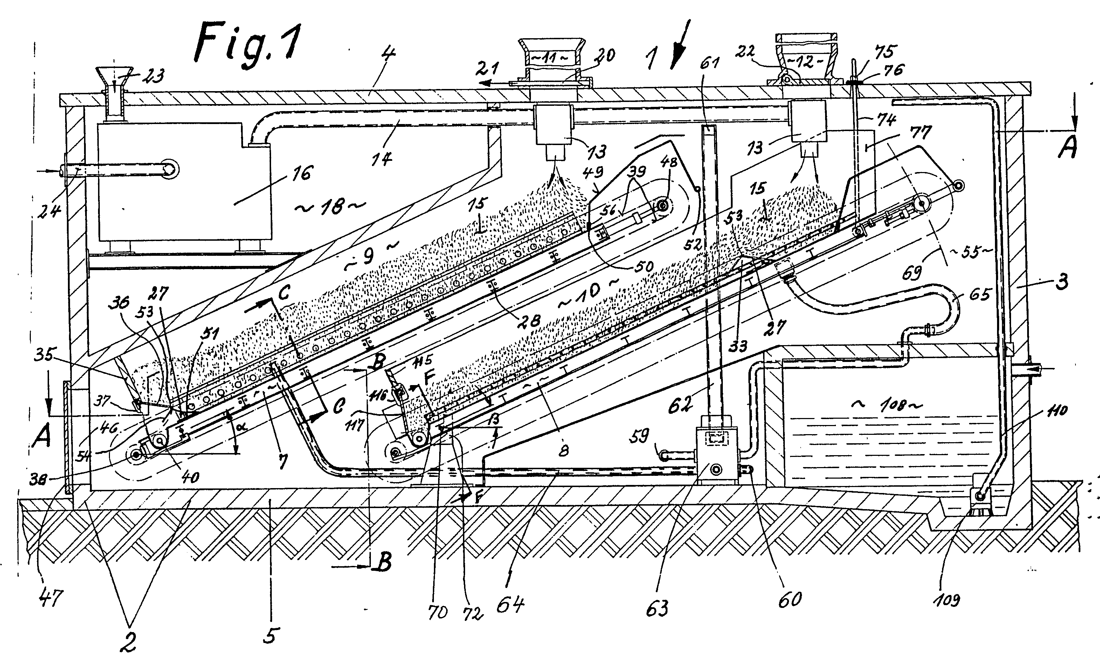

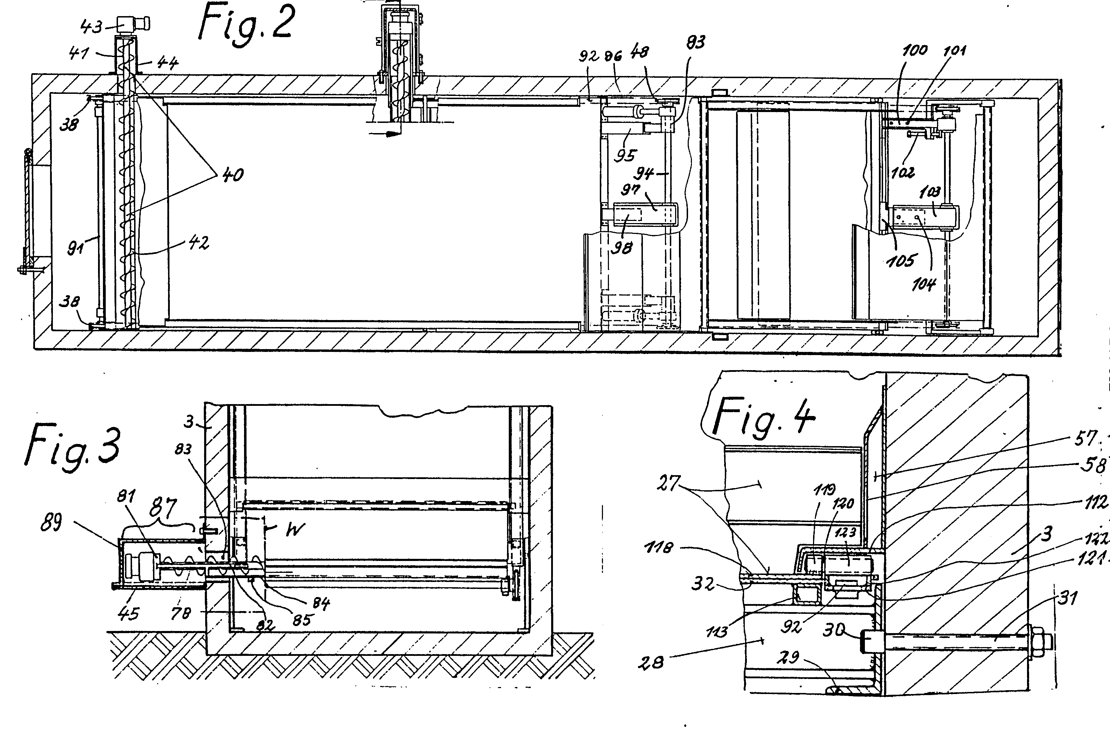

In dem gasdichten Gehäuse 2 der aeroben Verrottungsanlage 1, gemäß den Figuren 1 bis 4, das im wesentlichen aus den Seitenwänden 3, der Oberwand 4 und der Grundplatte 5 besteht, werden durch die Böden 7 und 8 unter den Winkeln $\alpha$ und $\beta$ von etwa 20 bis 30° liegende Schächte 9 und 10 gebildet, in die von oben entweder durch Einfüll-und Sammelschächte 11 und 12 das Rottegut 15 eingebracht wird,oder dasselbe wird mittels Breitverteilern 13 eingegeben. Den letzteren wird das Rottegut 15 durch die Rohrleitungen 14 zugeführt, wobei dasselbe in einem Mischer 16 aufbereitet sein kann, das heißt, in ihm wird die Gülle mit dem organischen Bestandteilen, wie gemahlenem Stroh, zu einer homogenen Masse vermischt.

Der Einfüll-und Sammelschacht 11 weist in seinem unteren Bereich einen Schieber 20 auf, mit dem die Räume des letzteren zum Innenraum des Gehäuses 2 abgetrennt werden und der zum Einbringen der angesammelten Rottemasse in Pfeilrichtung 21 bewegt wird, so daß hierdurch beispielsweise eine Tagesration der ein zubringenden Rottemasse,auf die Breite der Schächte verteilt,auf die Böden 7 und 8 gelangt. Der Einfüll-und Sammelschacht 12 wird unten durch einen Schwenkboden 22 vom Innenraum abgetrennt, der zum Einlassen des Rottegutes nach unten entsprechend abgeklappt wird.

Der Mischer 16 wird von organischer Masse über den Einfüllstutzen 23 und über die Leitung 24 von dem flüssigen Anteil, wie Gülle, befüllt.

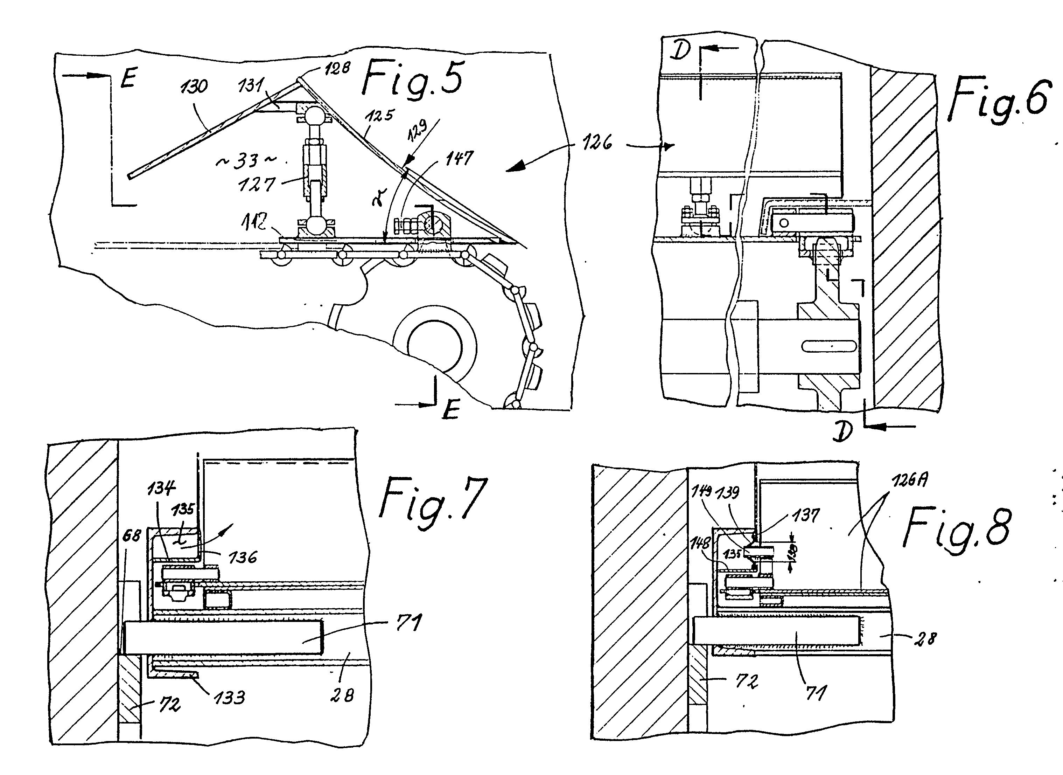

Der Boden 7 ist im wesentlichen durch einen Rahmen gebildet, der eine Vielzahl von querliegenden I-Trägern 28 aufweist, die in Längsrichtung mit außenliegenden Winkelprofilstücken 29 verbunden sind und wobei auf diesen Trägern ein Bodengleitblech 32 aufliegt. Zum Halt des Bodens 7 dienen die in die Winkelprofilstücke 29 einragenden Schraubenköpfe 30 von Spezialschrauben 31, die in den Seitenwänden 3 eingesetzt sind. Siehe hier insbesondere Fig. 4.

Das in den Schächten 9 und 10 befindliche und auf den Böden 7 und 8 liegende Rottegut 15 wird in an sich bekannter Weise durch von unten nach oben bewegte Mischwinkel 27 aufgelockert und durchmischt, wobei die Prozeßluft seitlich im Bereich desselben in seinen hinter seiner Voderwand gebildeten Freiraum 33 eingelassen wird, die einzelnen erfinderischen Ausführungsvarianten werden nachfolgendnoch im einzelnen behandelt. Den unteren Abschluß der Schächte 9 und 10 für das Rottegut 15 bildet eine Trennwand 35 mit einer sie verlängernden schwenkbar angeordneten Klappe 36, wobei diese Abschlußteile nach der unteren Umkehrung des Mischwinkels 27 um das Kettenrad 38 angeordnet sind, so daß der Misch winkel 27 im vom Rottegut freien Raum umkehrt. Die Schwenkung der Klappe 36 zur dem Rottegut entgegengesetzten Seite wird durch einen Anschlag 37 und dieselbe wird von dem Mischwinkel 27 beim Eintreten in den Schacht 9 bzw. 10 gegen das Rottegut verschwenkt,und nach Verlassen desselben - schwenkt die Klappe 36 sofort wieder in die Position seiner Ausgangslage zurück.

Vor der Trennwand 35 und der Klappe 36 ist im Boden 7 zwischen dem Kettentrieb 39 eine Gutaustrageinrichtung 40, hier mit einem Schneckenwerkzeug 42 versehen, vorgesehen, durch die nach Verlassen des Mischwinkels 27 dieses Bereiches lockeres, fertig verrottetes Gut ausgetragen wird, da dasselbe ihm in genügender Weise zufließt und es seitlich aus dem Gehäuse ausgetragen wird. Der aus dem Gehäuse heraustretende Teil 41 des Schneckenwerkzeuges 42 ist von einem Gehäuse 44 umgeben, das an seiner Unterseite mit einer zu öffnenden und wieder zu verschließenden Tür 45 versehen sein kann, um die Gasdichtheit des Gehäuses 2 auch in diesem Bereich in Zeiten, in denen kein Gut ausgetragen wird, zu gewährleisten. Das Schneckenwerkzeug 42 wird durch einen Getriebemotor 43 angetrieben.

Die Wände,wie Seitenwände 3 bzw. die Oberwand 4,sind bedarfsweise mit Öffnungen 46 versehen, die durch Türen 47 oder dergleichen gasdicht zu verschließen sind.

Das auf dem Mischwinkel 27 befindliche Rottegut 15 wird vor dem Erreichen der oberen Umkehrung um die oberen Kettenräder 48 von einem auf der gesamten Breite wirkenden Abstreifer 49 entfernt, indem letzterer mit seiner Vorderkante 50 auf der Vorderwand 51 des Mischwinkels 27 aufläuft, hierbei um eine Schwenkachse 52 dreht, um nach Erreichen der oberen Kante 53 auch auf dem von hier anschließend abfallend angeordneten Abdeckblech 54, auf Grund der Lage der Schwenkachse 52 zum Mischwinkel 27 weiter zur Wirkung zu kommen. Hiermit wird mit Sicherheit das aufliegende Rottegut 15 aus dem gesamten Bereich des Mischwinkels 27 entfernt bzw. von ihm zurückgehalten und gelangt somit nicht in Teilmengen in den dahinterliegenden Schacht bzw. Abschlußraum 55. Die Vorderkante 50 kann von einer sie umgebenden Gleitleiste 56 aus geeignetem Werkstoff, wie elastischem Gleitmaterial, ausgerüstet sein, womit eine Verringerung der Reibung sowie ein Festfressen verhindert und die Entstehung von Abrieb vermieden wird.

An den Seitenwänden 3 sind innen im Bereich des Mischwinkels 27, wie es die Figur 4 verdeutlicht, auf einer oder auf beiden Seiten schmale, hohe Prozeßluftkanäle 57 vorgesehen, die zum Austritt der Prozeßluft Austrittslöcher 58 aufweisen, welche in der Regel von dem Rottegut 15 abgedeckt sind und jeweils von dem nah vorbeistreifenden Mischwinkel 27 freigelegt werden, so daß während dieser Zeit des Vorbeistreifens die Prozeßluft in den freien Raum 33 eindringt und von hier aus gleichmäßig in das gelockerte Rottegut 15. Die so das Rottegut 15 durchdrungene Prozeßluft wird vom oberen freien Bereich der Schächte 9 und 10 durch Absaugöffnungen 61 und anschließende Leitungen 32 entnommen und einer Luftanlage 63 zugeführt, wobei dieselbe verschiedene Funktionen erfüllt, wie die Prozeßluft über Leitungen 64 bzw. 65 und die Prozeßluftkanäle 57 wieder dem Rottegut durch die Mischwinkel zuzuführen, aufgrund des Sauerstoffbedarfs erforderlichenfalls einen Anteil der Prozeßluft über eine Leitung 59 auszuscheiden und einen dementsprechenden Anteil frischer Luft, z.B. über die Leitung 60 einzuholen, entsprechend überschüssige Wärmeenergiemengen der Prozeßluft mittels eines ihr angeschlossenen Wärmetauschers zu entnehmen, die dann anderen Bedarfsfällen, wie Heiz-oder Trocknungsanlagen, zur Verfügung gestellt werden, oder zum - schnellen Aufwärmen frisch eingegebenen Rottegutes der Anlage Wärmemengen zuzuführen. Insbesondere ist dieses Aufwärmen beim ersten Ingangsetzen der Anlage vorteilhaft, wobei dieses Aufwärmen auch in den Einfüll-und Sammelschächten 11 und 12 erfolgen kann.

Zur Steuerung all dieser Aufgaben kann die erfinderische Verrottungsanlage mit entsprechenden Meßeinrichtungen für die Temperatur, den $CO_2$-Gehalt der Prozeßluft versehen werden, wobei über die einzelnen Meßdaten eine manuelle Bedienung der entsprechenden Einrichtungen erfolgen kann oder wobei die Meßdaten in eine computergesteuerte Regeleinrichtung gelangen, wodurch die erforderlichen Schaltungen automatisch den Dosier-und Reguliereinrichtungen zugeordnet werden.

Der Boden 8 ist in seiner Winkellage $\beta$ entsprechend dem Kreisbogen 69 um die Schwenkachsen 70, die durch die Bolzen 71, welche in den Lagerböcken 72 drehbar sind, verstellbar. Die Verstellung erfolgt über die Augenschrauben 74, die an dem Boden 8 schwenkbar anschließen, durch die Oberwand 4 treten und durch die Muttern 75 in ihrer Länge zum Boden 8 einstellbar sind. Hierbei können zwischen die Mutter 75 und die Oberwand 4 jeweils ein Kugelunterlegscheibenpaar 76, sowie entsprechende Dichtungen gelegt werden, siehe hierzu auch Fig. 7 u. 8.

Durch Seitenbleche 77 wird der Schacht 10 abgegrenzt. Das Schneckenwerkzeug 78 tritt durch ein Langloch 83 aus der Seitenwand 3, damit es bei der Winkelverstellung den erforderlichen Freigang hat. Daher ist die äußere Lagerung 81 des Schneckenwerkzeugs 78 an Streben 82 an geordnet, die inseitig an der Mulde 84 für die Schnecke befestigt sind, wobei über Verstärkungen 85 ein fester Halt gewährleistet ist, sowie der Getriebemotor 86 an der äußeren Lagerung 81 anschließt.

Das die Austrittspartien 87 umschließende Gehäuse 89 ist an seiner Unterseite mit einer zu öffnenden und zu schließenden Tür 45 versehen, die zum Gutaustrag geöffnet wird.

Die unteren Kettenräder 38 des Kettentriebs 39 sind auf einer Achse 91 montiert, die starr im Boden 8 gelagert ist, während die Lagerungen 93 der Welle 94 für die oberen Kettenräder 48 zum Nachspannen der Ketten 92 an einstellbaren Doppelschlittenführungen 95 angeordnet sein können, die in der Längsrichtung der Kettentriebe 39 beweglich sind und wobei mit der Welle 94 an sich bekannte hydraulische Kettenspanner 96 in Wirkverbindung stehen können. Der Antrieb für die Welle 94 kann über Motorgetriebeeinheiten 97 erfolgen, die hydraulisch oder elektrisch betrieben werden und zwischen dem Kettentrieb liegen. Diese Motorgetriebeeinheiten 97 sind ebenfalls durch eine Schlittenführung 98 in ihrer Lage gehaltert und auf Verdrehung gesichert.

Die Kettenspannung kann auch durch mechanische und manuell zu bedienende Mittel, wie festzuspannende Führungen 100, erfolgen, wobei nach Lösen der Klemmschrauben 101 über Druckschrauben 102 die Kettenspannung bequem manuell durchzuführen ist und das Motorgetriebeaggregat 103 in Verbindung mit seinem Lagerstück 105 über die Schrauben 104 festgesetzt werden kann.

Der Raum unter dem Schacht 10 kann zur Unterbringung eines Güllelagers bzw. Vorratstanks 108 genutzt werden, in dem eine Güllepumpe 109 eingesetzt ist, deren Druckleitung 110 an die Leitung 24 angeschlossen werden kann.

Die Trennwand 115 und die Klappe 117 für die untere Abgrenzung des Schachtes 10 sind an den Seitenblechen 77 und/oder an entsprechenden Halteteilen des schwenkbaren Bodens angeordnet und hiermit auch der Anschlag 116.

An den Prozeßluftkanal 57 schließt gemäß Figur 4 im unteren Bereich eine Abdeckung 112 an, durch die die Kette 92 gegen das Rottematerial geschützt ist. Auf den T-Trägern 28 des Bodens 7 sind Abstandsrohre 113 vorgesehen, auf deren Oberseite ein Gleitblech 32 für das Darüberziehen des Mischwinkels angeschlossen ist. Der Mischwinkel 27 ist im Bereich des Prozeßluftkanals 57 und der Abdeckung 112 diesen Teilen gegenüber so angepaßt, daß er mit geringem Abstandsspiel an diesen vorbeigleitet. An der Grundplatte 118 des Mischwinkels 27 ist das Lagerauge 119 angeordnet, in dem der Bolzen 120 fest eingesetzt ist und,wie später noch gezeigt, mit an sich bekannten Mitteln arretiert werden kann. Mit dem Kettenglied 121 der Kette 92 ist über Zwischenstücke 122,das Lagerrohr 123 angeschlossen, in das der Bolzen 120 schwenkbar eingreift, wobei die Grundplatte 118 diese Lagerung zur Abdeckung gegen eindringendes Rottematerial auf die Kette mit entsprechendem Spiel umfaßt.

Der Mischwinkel 126 gemäß den Figuren 5 und 6 weist eine Vielzahl von nebeneinander angeordneten Spannschlössern 127 auf, mit denen der Einstellwinkel $\gamma$ und hiermit die Höhenlage der Oberkante 128 veränderlich ist, so daß die Wirkung des Mischwinkels auf das Rottegut je nach seiner Konsistenz veränderbar ist. Hierzu ist das Stirnblech 125, das im Radius 129 konkav geformt ist, auf Grund seiner Dicke und Materialart, wie entsprechende rostfreie Qualität, so elastisch, daß es die Verstellung des Winkels $\gamma$ übernimmt, ohne bleibend zu verformen bzw. Bruchstellen zu erfahren.

Das Abdeckblech 130 ist so angeordnet, daß es von der Vorderkante 50 des Abstreifers 49 , wie später noch im einzelnen gezeigt wird, bei dem Durchzug des Mischwinkels auf ihr zur Wirkung kommt;hierbei ist das Abdeckblech über die Streben 131 abgestützt.

Die Figur 7 stellt einen Schnitt durch die Partie der Schwenkachse 70 des in der Winkellage verstellbaren Bodens 8 dar, wobei die Bolzen 71 des Bodens 8 in den Lagerböcken 72 mit zum einfachen Montieren nach oben offener Lagerstelle 68 - schwenken. Die längsliegenden beiden Außenholme 133 des Bodens 8 als U-Profilstäbe ausgebildet, werden auch hier durch eine Vielzahl von querliegenden I-Trägern verbunden, wobei im unteren I-Träger 28 der Bolzen 71 eingeschweißt ist, und im Gegensatz zur Ausführung nach Figur 4 ist im oberen Teil des U-Profilstabes, der Außenholme 133 ein Winkelstück 134 eingesetzt, womit ein Luftkanal 135 geschaffen wird und in dessen seitlichem Schenkel Löcher 136 zum Austritt der Prozeßluft wenn erstere durch den Mischwinkel freigeräumt sind. Der Bolzen 120 kann,wie es die Figur 5 zeigt, durch eine Körnerschraube 147 abgesichert sein.

Die Ausführung dieser Partie der Schwenkachse 70 nach Figur 8 weist im Gegensatz zu der nach Figur 7 im seitlichen Schenkel 137 des Winkelstücks 148 einen durchgehenden Schlitz 138 auf, der durch zwei innen angeordnete sich überlappende Dichtprofile 139 für den Ruhebetrieb geschlossen wird. Am Mischwinkel 126 A ist zusätzlich ein abgeflachtes Rohrstück 149 aufgeschweißt, das in den Luftkanal 135 einragt und somit die Dichtprofile hier außer Funktion setzt, so daß die Prozeßluft durch die Rohrstücke 149 in den freien Raum des Mischwinkels 126 A strömt.

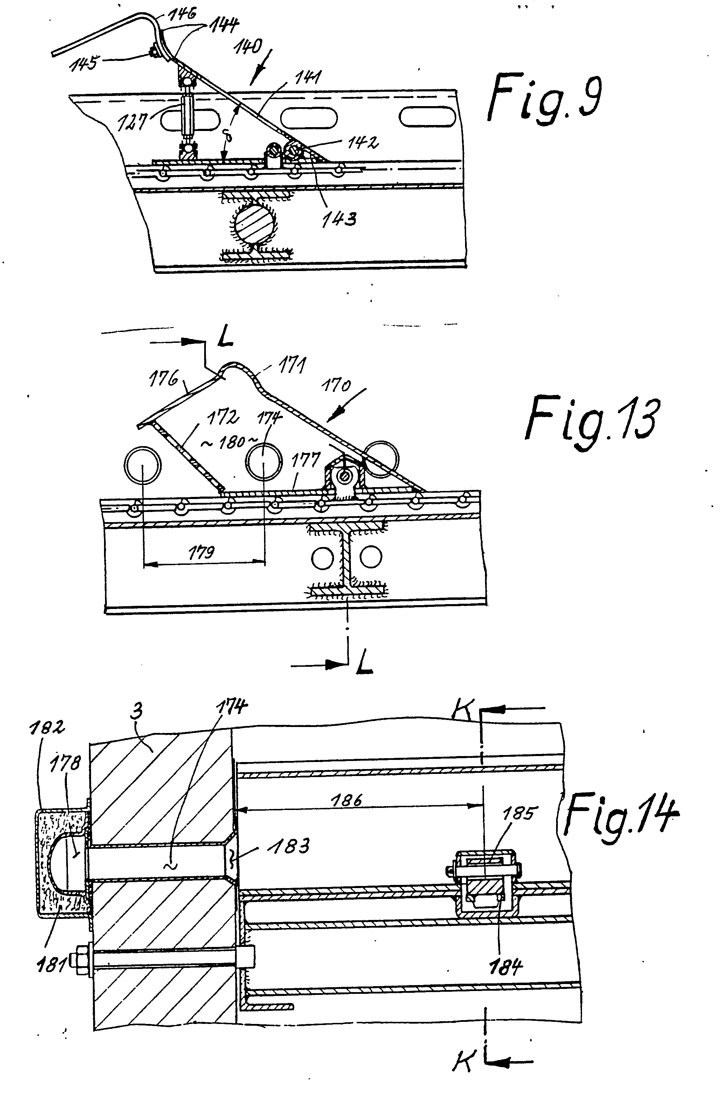

Der Mischwinkel 140, wie es die Figur 9 zeigt, ist ebenfalls in seiner Einstellwinkellage $\delta$ verstellbar, wobei die Vorderwand 141 schwenkbar - scharnierartig über einen Bolzen 142 im Bereich des Lagerteils der Spitze 143 anschließt und die Verstellung hier ebenfalls durch eine Vielzahl von Spannschlössern 127 durchzuführen ist. Ein oberer Bereich 144 der Vorderwand 141 weist ein hohl geformtes Teilstück auf, das mit Senklöchern versehen ist,in die Senkschrauben 145 eingesetzt werden, durch welche ein der Form des oberen Bereichs 144 angepaßtes und von der Hinterseite angelegtes Abdeckblech 146 haltert. Hierbei sind für die Senkschrauben 145 in dem Abdeckblech Langlöcher in Längsrichtung vorgesehen, durch die das Abdeckblech nach Lösen der Muttern der Senkschrauben in der Höhe und Winkellage verstellbar angeordnet werden kann, so daß hierdurch ein Anpassen des Mischwinkels an verschiedene Gutarten möglich ist.

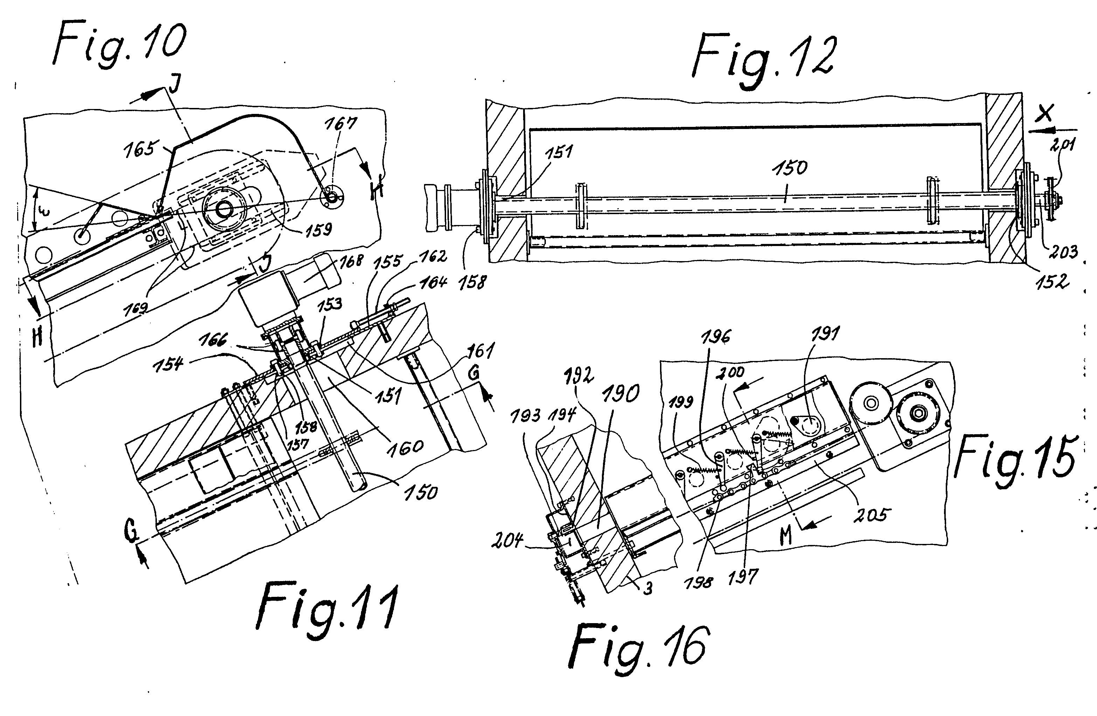

Bei der oberen Kettentriebumlenkung, - spannung und dem zugehörigen -antrieb für diesen, gem. den Figuren 10 bis 12, ist die Welle 150 durch Lagerungen 151 und 152 gelagert, deren Gehäuse 153 auf einer Verstellplatte 154 und diese auf einer Grundplatte 155 aufgelegt und über Schrauben 158 angeklemmt sind. Diese Schrauben sind in Gewindelöcher eines gegen die Innenseite der Grundplatte 155 anliegenden Anzugsteils 157 eingedreht, so daß hierdurch alle Teile miteinander durch die Schrauben 18 festsitzend montiert sind. Die Grundplatte 155 weist zur Verstellung zum Spannen der Kettentriebe Langlöcher 159 auf, die von der Verstellplatte 154 in den Positionen dieser Platten zueinander abgedeckt sind, so daß auch dieser Bereich des Gehäuses 2 gasdicht abgeschirmt ist. Die Seitenwand 3 weist ebenfalls für den Freigang der Welle 150 ein entsprechendes Langloch 160 auf,und die Seitenwand 3 ist noch mit einem Freiraum 161 zum Freigang des Anzugsteils 157 versehen.

An der Verstellplatte 154 schließt am oberen Ende eine Gewindestange 162 an, deren Mutter 163 an einem Auge 164 der Grundplatte 155, die ebenfalls am oberen Ende derselben vorgesehen ist, im entsprechenden Abstand zur Anlage kommt, so daß hiermit das Nachspannen der Ketten bequem dann durchgeführt werden kann, wenn die Schrauben 158 gelöst worden sind.

Von dem Motor-Getriebeaggregat 168 wird über eine elastische Kupplung 166 die Welle 10 für den Kettentrieb angetrieben.

Die Schwenkachse 167 des Abstreifers 165 für das Entfernen des Rottegutes vom umkehrenden Mischwinkel liegt unterhalb der Mitte der Kettentriebe 169, so daß der Auflaufwinkel $\epsilon$ und somit die Reibung beim Abstreifen des Rottegutes verhältnismäßig klein sind.

Der Mischwinkel 170 nach Figur 13 weist im oberen Bereich 171 eine konvexe nach vorn verlaufende Form auf, womit dem Rottegut 15 beim Passieren dieses Bereiches 171 ein verstärkter Durchwirbelungseffekt verliehen wird. Die Stirnwand 175 weist nach dem oberen Bereich 171 eine Abdeckung 176 auf, an die sich eine Lochblechwand 172,etwa parallel zur Stirnwand 175 liegend bis zur Grundplatte 177 anschließt, wodurch die über den außen liegenden Rohrkanal 178 und die Zuführlöcher 174, die durch die Seitenwand 3 geführt sind, einströmende Prozeßluft gleichmäßig verteilt in das Rottegut 15 eindringt. Der Abstand 179 der Zuführlöcher 174 ist mindestens so groß gewählt, daß stets ein solches,das vom Mischwinkel 170 freigeräumt ist, mit vollem Querschnitt in den Innenraum 180 des Mischwinkels 170 einmündet. Es kann auch so vorge gangen werden, daß stets eineinhalb oder zwei Querschnitte der Zuführlöcher 174 in den Innenraum 180 münden, wobei je nach den Betriebsbedingungen, der Breite der Anlage sowie Größe der Zuführlöcher 174 im Verhältnis zum Mischwinkel 170 nur auf einer/oder beiden Seiten der Anlage solche Luftzuführeinrichtungen vorgesehen sein können.

Der Rohrkanal 178 kann über die Isolation 181, die von einer Abdeckung 182 gehaltert ist, wärmeisoliert sein. Die Zuführlöcher 174 können mit einem glatten Rohr 187 aus korrosionfestem Werkstoff, wie Aluminium oder Kunststoff,bestehen und an ihrer Mündung an der Innenseite der Seitenwand 3 mit einem Konus 183 ausgebildet werden, damit beim Abstreifen des Rottegutes 15 durch den Mischwinkel 170 keine Teile desselben eingeschoben werden, sondern vielmehr durch den Konus und die einströmende Prozeßluft stets ein Freiräumen der Mündung eintritt.

Die Kette 184 und somit das an ihr befestigte Lagerstück 185 liegt im Abstand 186 von der Seitenwand entfernt, so daß hierdurch für die Prozeßluft ein freieres Einströmen in den Innenraum 180 des Mischwinkels 170 vorliegt, im Gegensatz zu der Lösung, wenn die Kette direkt an der Außenseite vorgesehen ist.

Es ist von Vorteil, wenn die Zuführlöcher 190 nur dann geöffnet sind, wenn ihre Mündung sich über dem Innenraum der Mischwinkel befindet, da somit keine Prozeßluft unkontrolliert über diese Zuführlöcher austritt, z.B. wenn das Rottegut diese Löcher nicht oder nur mangelhaft außerhalb des Bereichs des Mischwinkels abdeckt. Außerdem erhält das in den Kanälen befindliche Rottegut 15 in seinen Außenbereichen stets mehr oder zuviel durchströmende Prozeßluft, insbesondere im Gegensatz zu den inneren Bereichen.

In den Figuren 15 und 16 ist eine Lösungsmöglichkeit zum Öffnen der Zuführlöcher 190 gezeigt, für die Zeit, in der sich der Mischwinkel in den Austrittsbereichen der Zuführlöcher jeweils befindet. Hierzu sind die Zuführlöcher 190 von außen mit einer Abdichtklappe 191 abgedeckt, die drehfest aber axial verschiebbar auf einer Welle 192 angeordnet ist und von einer Druckfeder 193 stets zur Abdichtung gegen eine Abdeckplatte 194, die in diesem Bereich an die Außenseite der Seitenwand 3 angelegt ist, zur Anlage gebracht wird. Anderseitig ist auf der Welle 192 festsitzend ein Schalthebel 196 so angeordnet, daß er von dem Mitnehmer 197 einer außerhalb des Schachtes vorgesehenen Kette 198 dann und so lange verschwenkt wird, wie das Öffnen durch die Abdichtklappe 191 zum vorbeiziehenden Mischwinkel zweckmäßig ist. Hierzu ist der Mitnehmer 197 in seinem oberen Bereich entsprechend verlängert ausgeführt,und der Hebel 196, und somit die Abdichtklappe191,wird nach Verlassen des Mitnehmers durch die Zugfeder 199 gegen einen Anschlag 200 wieder in die verschließende Position gebracht. Die Kette 198 wird über das Kettenrad 201, welches auf einer Verlängerung 203 der Welle 150 angeordnet ist, so angetrieben, daß der Mitnehmer stets mit dem Mischwinkel synchron bewegt wird. Der Kanal 204 für die Zuführung der Prozeßluft, in dem sich die Abdichtklappe befindet, kann ebenfalls wärmeisoliert sein, und zur Führung der Kette 198 ist eine Leiste 205 mit der Seitenwand angeschlossen, auf der die Kette in der gewünschten Lage gleitet. Es können auch zwei oder Mehrere Mitnehmer 197 hintereinander liegend vorgesehen sein. Das Öffnen und Schließen der Abdichtklappen 191 kann auch schon etwas vor dem Erreichen und nach Passieren des Mischwinkels 27 oder andere Ausführungen erfolgen.

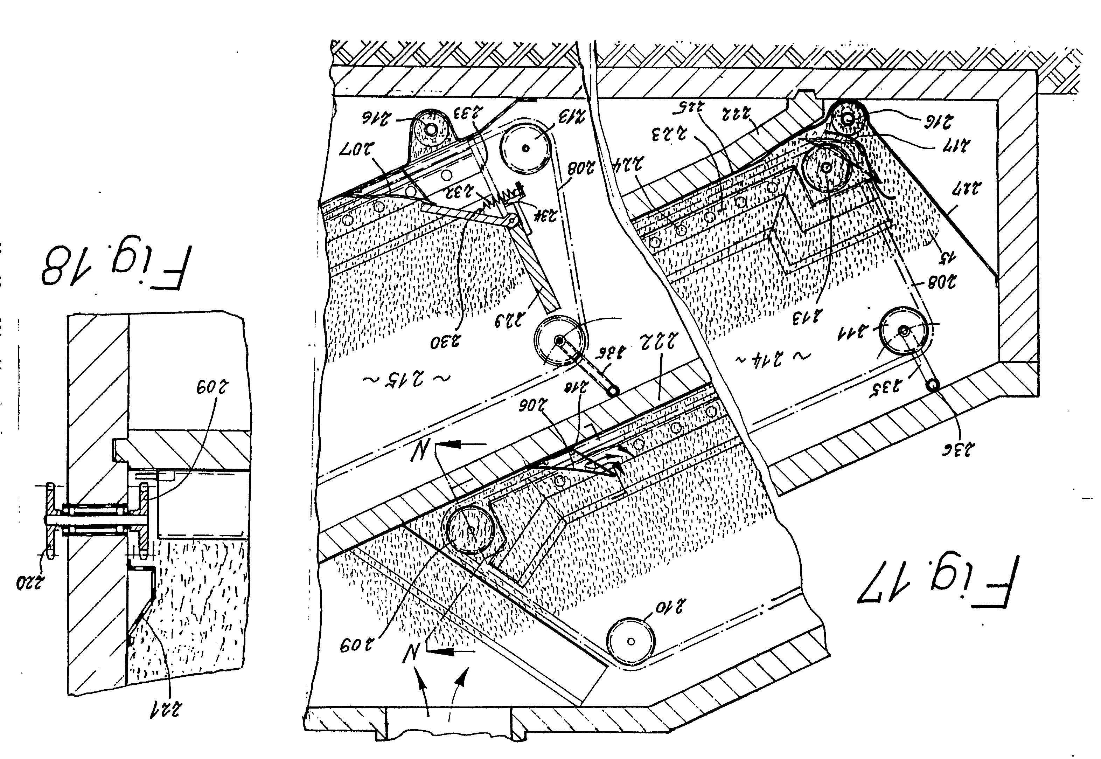

Die Mischwinkel 206 und 207 sind außen,ähnlich wie es bereits beschrieben ist,mit Ketten 208 angeschlossen, wie es aus den Figuren 17 und 18 hervorgeht. Jedoch werden hier die Ketten jeweils über vier Kettenräder 209 bis 213 so umgelenkt, daß die Mischwinkel 206 und 207 bei der oberen Umlenkung in den Schächten 214 und 215 nach oben gebracht werden und im oberen freien Raum der Schächte zurückgeführt werden, um , wie es beim Schacht 214 der Fall ist, im unteren Bereich desselben wieder in das Rottegut einzudringen. Damit der Mischwinkel 206 hierbei nicht mit der Schnecke 216 in Kollision gerät, sind beidseitig Führungsleisten 217 vorgesehen, auf denen entsprechende Führungsstücke 218 des Mischwinkels 206 gleiten.

Der Antrieb für die Kettentriebe 208 erfolgt über die Kettenräder 209 , wobei diese außen gleichermaßen über Antriebsmittel, wie Kettenräder 220,angetrieben werden. Zur Abdeckung der Kettenräder ist das Abdeckprofil 221 vorgesehen, das im Bereich des Bodens 222, ähnlich wie es bereits beschrieben ist, durch einen Luftkanal 223 erweitert ist und wobei über die Löcher 224 die Prozeßluft einströmt.

Den unteren Abschluß des Schachtes 214 bildet eine Trennwand 227, die im unteren Bereich die Schnecke 216 zum Austragen des Rottegutes 15 umschließt und dann am Boden 222 verläuft, bis sie an das Gleitblech 225 anschließt, das über dem Boden 222 vorgesehen ist.

Der Schacht 215 wird durch die Trennwand 229 im unteren Bereich abgegrenzt, an die sich nach unten eine schwenkbare Klappe 230 anschließt und die vom Mischwinkel 207 bei dessen Eintritt in das Rottegut gegen die Wirkung der Zugfeder 232 verschwenkt wird.

Nach Passieren des Mischwinkels 207 - schwenkt die Klappe 230 wieder in die Ausgangsposition 233 zurück , in der sie durch den Anschlag 234 gehalten wird. Auch bei diesem Ausführungsbeispiel fällt nach Verlassen des Mischwinkels 207 genügend gelockertes, abschließend stabilisiertes Rottegut 15 der Schnecke 216 zum Austragen zu.

Zum Spannen der Kettentriebe 208 sind die Kettenräder 212 von außen an einem Spannarm 235 gelagert, wobei der Spannarm über seine Schwenkachse 236 von außen verdreht und festgesetzt werden kann.

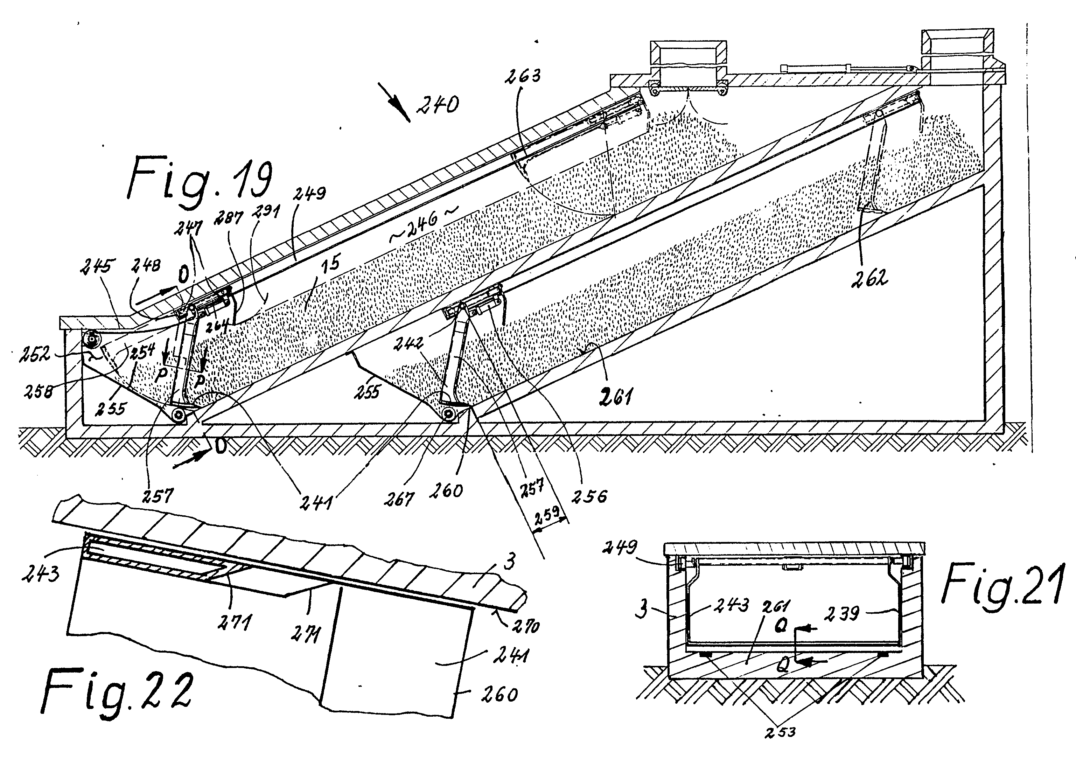

Die Figuren 19 bis 21 zeigen eine Zweischachtanlage 240, bei der die Mischwinkelprofile 241 Teile einer Schwenkeinrichtung 242 sind, wobei die Mischwinkelprofile außen an Wangen 243, z.B. durch Schweißen , fest angeschlossen sind. Hierbei ist die Wange 243 hohl ausgeführt, so daß durch sie Prozeßluft den ebenfalls hohlen Mischwinkelprofilen zugeführt werden kann, indem sie oben an einer hohlen Schwenkachse 244 anschließt, der über eine Schlauchleitung 245 die Prozeßluft zugeführt wird. Die anderseitige Wange 239 kann als massives Flachstück ausgeführt sein, bei sehr breiten und hoch angefüllten Kanälen 246 können die Wangen beidseitig hohl sein, um die Prozeßluft zuzuführen. Es kann auch so vorgegangen werden, daß hinter schmalen Wangen mit ihnen entsprechende Vierkantrohre zur Prozeßluftzuführung angeschlossen sind. Die Schwenkachse 244 ist außen in einem Fahrgestell 247 gelagert, das über Rollen 248 außen in die Seitenwände 3 eingebrachte Schienen 249 fahrbar ist. Der Antrieb des Fahrgestells kann dadurch erfolgen, daß z.B. über ein Motorgetriebeaggregat 250 außen im Bereich der Schienen vorgesehene Zahnstangen über Zahnräder, die auf den Wellen 251 sitzen, die Hin-und Herbewegung eingeleitet wird.

Der Fahrbereich des Fahrgestells kann auch z.B. auf einfache Weise durch in beide Richtungen wirkende Kettenzüge durchgeführt werden, die motorig, elektrisch oder hydraulisch angetrieben werden.

Zwischen den Wangen 243 und dem Fahrgestell 247 sind Hydrobeweger 256 über jeweilige Schwenkachsen angeordnet, die die Schwenkeinrichtung 242 in die Arbeitsposition 257 und die Hochlage 258 bringen.

Hierbei liegt die Schwenkachse 244 um das Maß 259, in bezug auf die Richtung der Aufwärtsbewegung, vor der Spitze 260 der Mischwinkelprofile 241, so daß diese Spitze sich nicht auf dem Boden 261 beim Hochfahren festsetzen kann. Die Position der Spitze auf dem Boden bzw. mit geringem Abstand über demselben kann durch entsprechende nicht dargestellte Anschläge zur Begrenzung der Schwenkbewegung der Schwenkeinrichtung eingestellt werden. Nach Erreichung der obersten Stellung 262 der Schwenkeinrichtung 242 wird diese in die Hochposition 263 über die Hydrobeweger 256 gebracht, in der diese mit dem Fahrgestell in die untere Position 264 gelangt und in der die Schwenkeinrichtung von der Position 258 in die Arbeitsposition 257 verschwenkt wird. Das abgeschlossen fermentierte Rottegut wird auch bei diesem Beispiel seitlich über Schneckeneinrichtungen 267 ausgetragen, wobei diese über ein Motorgetriebeaggregat 268 und einen Kettentrieb 269 bedarfsweise angetrieben wird. Die Wangen, ob als Hohlprofile oder Massivstücke ausgebildet, sind, wie es die Figur 22 zeigt, sehr nah an der Innenseite 270 der Außenwand 3 vorgesehen,und ihre vorderen Kanten sind mit einer spitzen Schräge 271 versehen, damit das Rottegut gut abgewiesen werden kann und somit keine Stauwirkung eintritt. Die Dicke der Wangen wird möglichst klein gehalten, was durch die Verwendung hochfester und elastischer Werkstoffe ermöglicht wird, die vorzugsweise korrosionsfest sind.

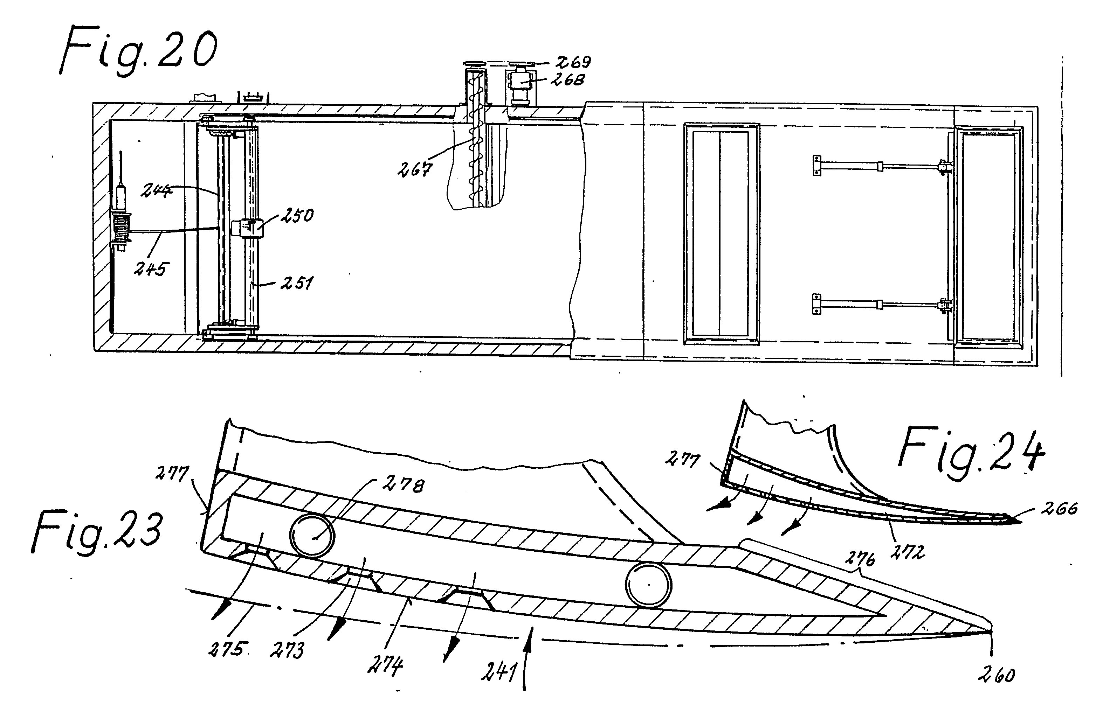

Die Mischwinkelprofile 241 und 272 weisen an ihrer Unterseite Senklöcher 273 auf, aus denen die Prozeßluft austritt, wobei die Form der Unterseite 274 entweder im Radius um die Schwenkachse 244 ausgeführt ist oder ihm gegenüber nach hinten etwas zurückstehend verläuft, wie es dadurch gezeigt ist, daß die Linie 275 dem Radius um die Schwenkachse 244 entspricht. Im vorderen Bereich 276 ist das Mischwinkelprofil 241 angespitzt ausgeführt, wogegen bei der Figur 24 das Mischwinkelprofil 272 aus zwei jeweils in einem Radius geformten Wänden zusammengefügt ist und vorne eine kurze Spitze angearbeitet wurde. Zum eventuellen Reinigen der Mischwinkelprofile kann entweder die Hinterwand 277 ganz oder teilweise abnehmbar ausgeführt sein, es kann aber auch so vorgegangen werden, daß stirnseitig entsprechende Gewindestopfen 278 vorgesehen sind, durch die mittels Preßluft evtl. eingedrungene Rotteteile herausgeblasen werden können.

Die Prozeßluft wird über die Zuleitung 280 von einer nicht dargestellten entsprechenden Luftanlage 63 der Schlauchtrommeleinrichtung 281 zugeführt, von der aus die Schlauchleitung 245 abgezogen wird. Beim Rücklauf des Fahrgestells wird der Schlauch wieder auf die Schlauchtrommeleinrichtung selbsttätig aufgewickelt In gleicher Weise können auch andere Versorgungsleitungen, wie elektrische oder Ölleitungen,dem Fahrgestell 247 zugeordnet werden zur Betätigung der Hydrobeweger 256 oder zur Speisung des Motors des Motorgetriebeaggregates 250.

Es kann auch so vorgegangen werden, daß auf dem Fahrgestell 247 eine komplette Hydraulikanlage angeordnet wird , deren Betätigung über elektrische Zuleitungen erfolgt.

Die Trennwand 255 ist so geformt, daß sie nah an dem Kreisbogen 254 des einschwenkenden Mischwinkelprofils 241 liegt.

Die Einfüll-und Sammelschächte 282 und 283 sind ähnlich denjenigen 11 und 12 gem. Figur 1 ausgebildet, der Schieber 290 zum Abschluß des Einfüll-und Sammelschachtes 283 wird über die Hydrobeweger 284 geöffnet und geschlossen, wobei die Vorderkante 285 als schneidende Spitze ausgeführt ist, wodurch beim Schließen etwaiges stengeliges Restmaterial, das den Schlitz 289 zum Eindringen des Schiebers verdeckt, durchtrennt wird. Zum gas-und flüssigkeitsdichten Abschluß der Einfüll-und Sammelschächte 282 und 283 können die Schieber 290 oder Schwenkböden 286 mittels Andrücken durch Anlaufen an entsprechende -

schräge Flächen oder durch besondere Druckeinrichtungen an ihre Anlageflächen angepreßt werden, wobei diese Anlageflächen mit elastischen Dichtungsbelägen versehen sein können.

Zum Ausgleich einer ungleichen Schütthöhe innerhalb des Rottegutes eines Schachtes, also zum Egalisieren der Rottegutoberfläche, sind an den Fahrgestellen 247 in der Breite der Schächte Abstreicheinrichtungen 287 vorgesehen, die - schwenkbar angeschlossen sind,und zwar, wie dargestellt,entgegen dem Uhrzeigersinn für den Rücklauf der Fahrgestelle 247 im Kreisbogen 291 nachgiebig,und in der anderen Richtung legen sich die Abstreicheinrichtungen 287 an Anschläge der Fahrgestelle 247 an.

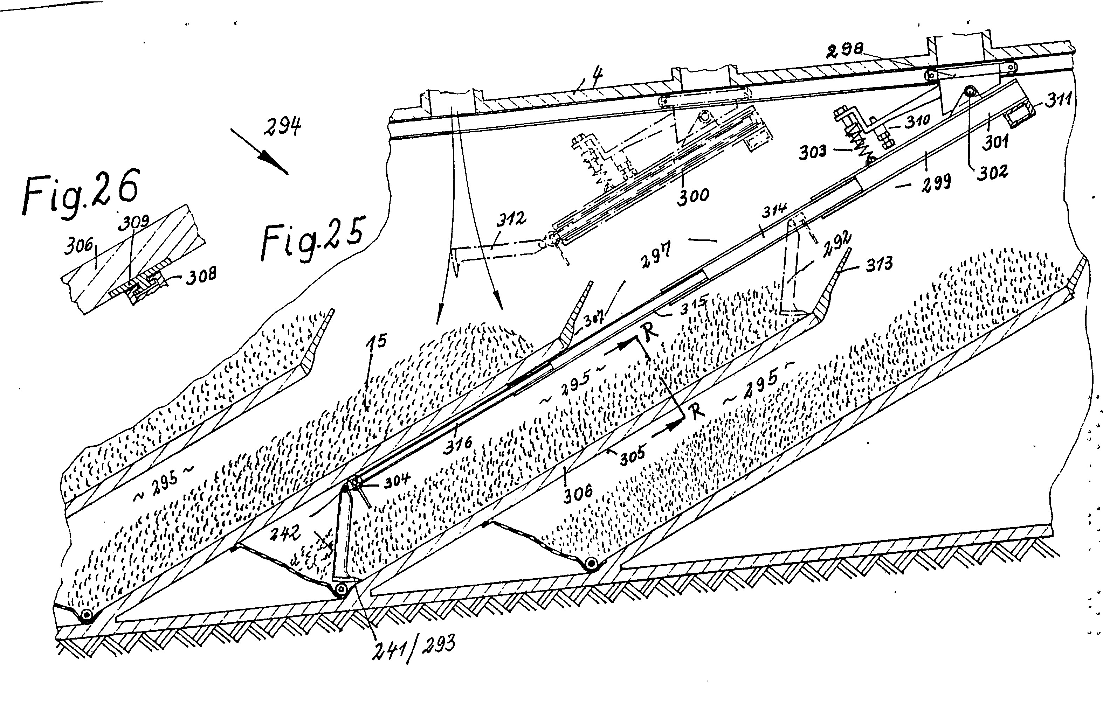

Bei der Verrottungsanlage 294 gem. den Figuren 25 und 26 ist für eine Vielzahl von Schächten 295 und 296 eine einzige Schwenkeinrichtung 242 mit einem Mischwinkelprofil 241 vorgesehen, wodurch an Bauaufwand gespart wird, da das Rottegut in jedem Schacht nur in größeren Zeitabständen, wie z.B.30 bis 180 Minuten von den Mischwinkeln bzw. Mischwinkelprofilen aufgelockert und durchlüftet werden muß.

Die Schwenkeinrichtung 242 ist an einem Teleskopgestänge 297 schwenkbar angebracht, wobei letzteres an einer Verfahreinrichtung 298 angeordnet ist, mit der diese Einrichtungen in die zu jedem Schacht erforderliche Position 299, wie sichtbar ausgezogen gezeichnet,und 300,wie strichpunktiert angedeutet, gebracht werden. Hierbei ist das obere fest an der Verfahreinrichtung 298 angeschlossene zweiseitige Rahmenteil 301 des Teleskopgestänges 297 in seiner Winkellage zu den Schächten fein einstellbar, indem es an Schwenkachsen 302 an der Verfahreinrichtung 298 anschließt und mittels einer Zugfedereinrichtung 303 etwas höher eingestellt wird, als es beim Ausfahren des Teleskopgestänges 297 für die Anlage der Rolle 304 an der Unterseite 305 der Böden 305 entspricht. Hierzu läuft die Rolle 304 beim Ausfahren an der Einlauffläche 307 an,und zum sicheren Halt bzw.zur Entlastung des Teleskopgestänges 297 kann,wie es die Figur 26 zeigt, an der Vorderpartie desselben ein Führungsteil 308 vorgesehen sein,das um ein Schlittenteil 309 greift, welches in die Unterseite 305 des Bodens 306 eingelassen ist. Hierbei wird das Schlittenteil 309,auf die Länge des Schachtes bezogen,im gleichen Abstand zur Oberseite des darunter befindlichen Bodens einjustiert,und zum sicheren Paaren ist das Schlittenteil vorn stark angespitzt. Die Wirkung der Zugfedereinrichtung 303 wird durch die einstellbare Anschlagschraube 310 begrenzt,und über die Profile 311 sind die beiden außen liegenden Rahmenteile 301 zu einer Einheit verbunden. Die Schwenkeinrichtung 242 kann zum Fahren in den nächsten Schacht in die Position 312 gebracht werden, damit sie zu dem eingefüllten Rottegut 15 und den Wänden 313 genügend Abstand aufweist, wogegen die Schwenkeinrichtung 24 zum Einfahren in den Schacht in eine zum Teleskopgestänge 297 parallele Lage gebracht wird.

Die Position 300 zeigt die Schwenkeinrichtung 242 mit dem Teleskopgestänge 297 im eingefahrenen Zustand, wobei das Ein-und Ausfahren der verwendeten drei Gestängeteile 314, 315, 316 durch an sich bekannte Mittel, wie Zugmittelgetriebe, Teleskophydobeweger oder dergleichen, erfolgen kann.

Es kann auch so vorgegangen werden, daß das Mischwinkelprofil 241 mit der Schwenkeinrichtung 242 an einem Fahrsatz angeordnet wird, der unter Zuhilfenahme eines in die Seitenwände 3 eingelassenen Schienen-und Weichensystems bedarfsweise in die und aus den einzelnen Schächten gefahren wird, wobei die Fortbewegung des Fahrsatzes durch mit den Schienen verlegte Zahnstangen,in die Zahnritzel des Fahrsatzes eingreifen, · bewerkstelligt wird.

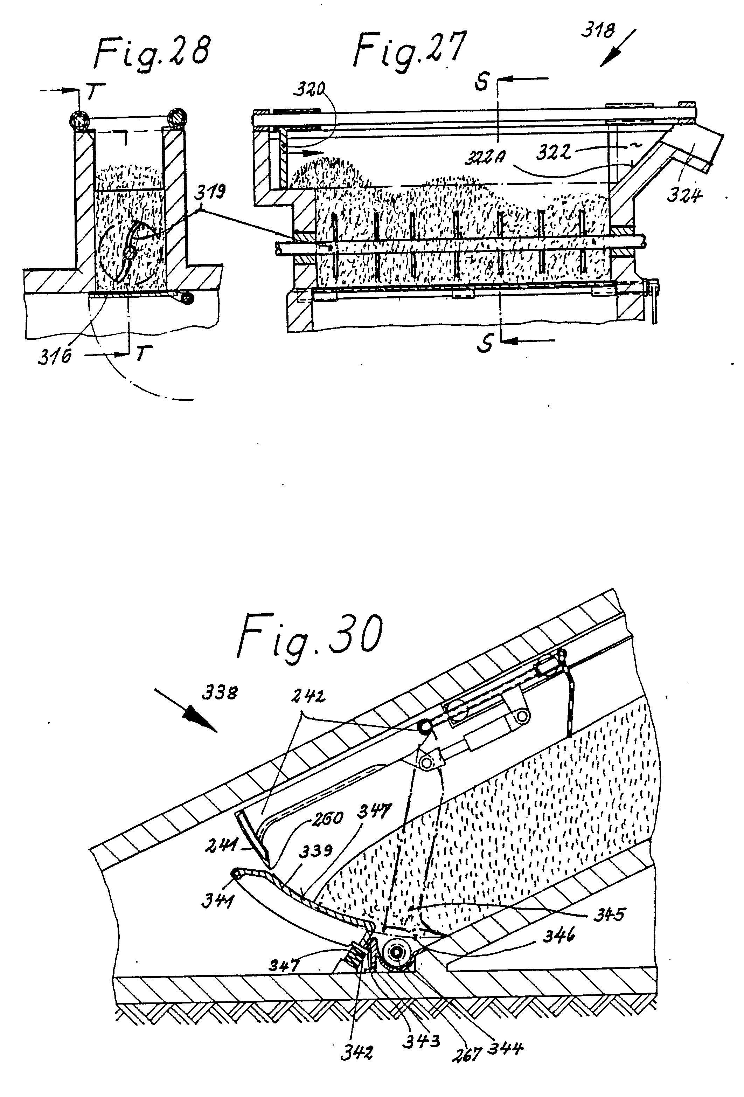

Der Einfüll-und Sammelschacht 318, gemäß den Figuren 27 und 28 ist mit einer Mischeinrichtung 319 und einer Glattstreicheinrichtung 320 ausgerüstet, wobei die Mischeinrichtung 319 die getrennt eingebrachten flüssigen und festen bzw. flockigen Bestandteile durchmischt und die Glattstreicheinrichtung 320 durch ihre Bewegung in Pfeilrichtung 321 das Material im Schacht, im bezug auf die Breite,gleichmäßig verteilt. Hierbei wird überschüssiges Material im Raum 322 angesammelt, das beim Zurückfahren der Glattstreicheinrichtung 320 in den Raum 323 zurückrutscht. Ist der Überschuß des Materials größer,als er vom Raum 323 aufgenommen werden kann, so wird dieses überschüssige Material über den Auswurfschacht 324 ausgeschieden, wobei dasselbe in eine Sammelmulde gelangen kann oder in einen Gülle-bzw. Feststoffbehälter für die organischen Bestandteile des Rottegutes.

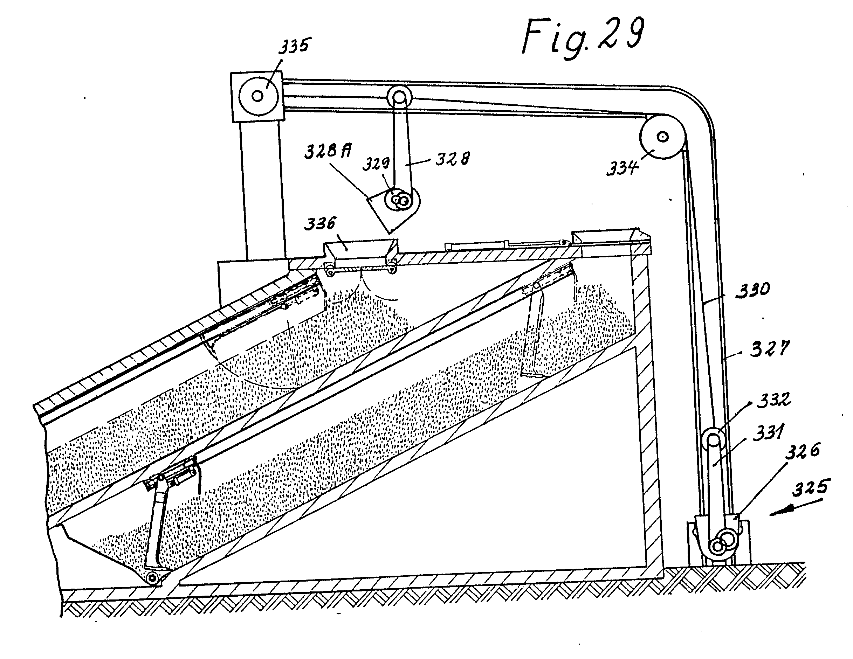

Mit einem einzigen Sammel-und Beschickungsbehälter 325 gemäß der Figur 29 können mehrere Schächte beschickt werden.Nach Eingabe der flüssigen und festen Bestandteile des Rottegutes können diese durch eine in dem Behälter 326 eingebaute Mischeinrichtung vermischt werden. Hierbei kann die Flüssigkeit gut in die festen Bestandteile einziehen. Zur Beschickung der einzelnen Schächte wird der oben offene Behälter über das Seilzugführungsgestänge 327, wie es die Position 328 zeigt, über eine Schachteinmündung 336 gebracht und dann wird der Behälter mittels einer Getriebeeinrichtung 329 in die ausschüttende Stellung nach Position 328A verschwenkt, wobei hier die jeweiligen Verschlußeinrichtungen der Schächte mit dem Einbringen des Gutes geöffnet werden.

Der Seilzug 330 greift an das Gabelgestell 331 an, das über die Rollen 332 im Seilzugführungsgestänge 327 geleitet wird, wobei der Seilzug 330 im Bereich der oberen Umlenkung auf den Rollen 334 abläuft. Im Bereich von der oberen Umlenkung bis zur Seilwinde 335 verläuft das Seilzugführungsgestänge 327 so stark ansteigend, daß das Gabelgestell mit dem Behälter nach der Entleerung selbsttätig in die Ausgangsstellung zurückgeht. Es kann auch so vorgegangen werden, daß der Sammel-und Beschickungsbehälter durch einen Seil-oder Kettenzug in beiden Richtungen bewegt wird.

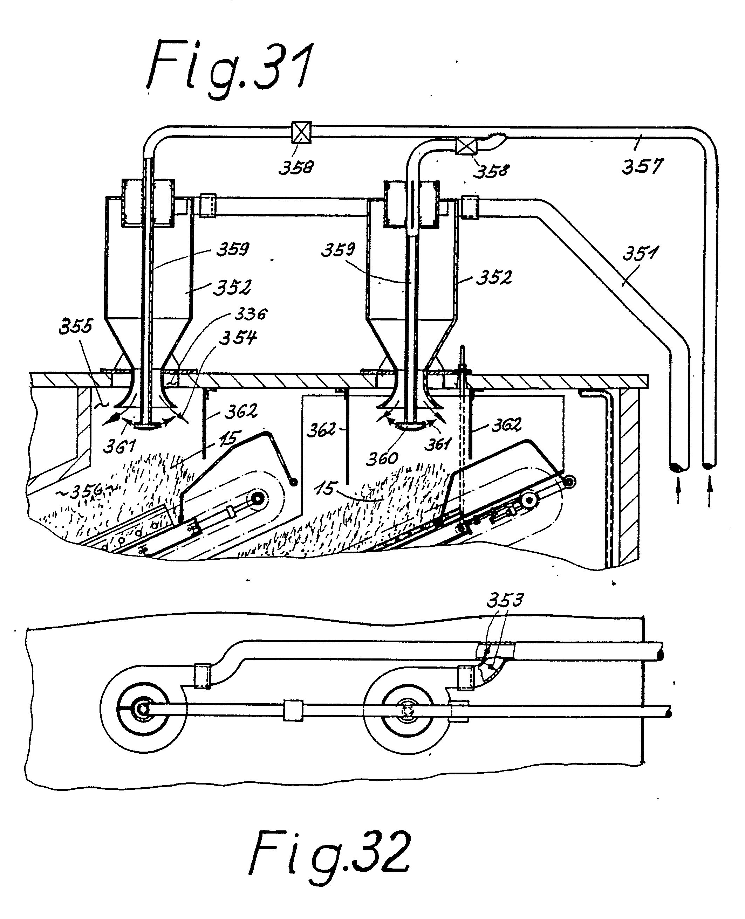

Bei der Verrottungsanlage 338 gemäß der Fig. 30 ist die untere Trennwand 339 des Schachtes 340 um die Achse 341 schwenkbar gelagert und liegt in der dargestellten Position mit ihrem Anschlag 342 an einem Vorsprung 343 der Schale 344 für das Schneckenwerkzeug 42 an. Beim Einnehmen der Schwenkeinrichtung 242 der Position 345 gemäß dem Kreisbogen 346 gleitet das Mischwinkelprofil 241 mit seiner Spitze 260 an der Oberfläche 347, die dem Kreisbogen 346 formmäßig angepaßt ist, der Trennwand 339 vorbei und verschwenkt dieselbe um den Differenzbetrag zum Kreisbogen 346 gegen die Wirkung der Feder 348 zurück, wobei das Rottegut von der Oberfläche 347 abgehoben wird und sich somit kein Stau desselben vor der Spitze 260 beim Herabschwenken bilden kann.

Bei der Ausführung der Verrottungsanlage nach Fig. 31 und 32 wird die organische Masse, wie z.B. gemahlenes Stroh, durch die Leitung 351 mittels eines Gebläses zugeführt und in den jeweiligen zu einem Schacht gehörenden Zyklon 352 eingegeben. Über die Scheibenventile 353 erfolgt die Steuerung zur Beschickung des jeweiligen Schachtes.

Die organische Masse wird gemäß Pfeilrichtung 354 in den oberen Bereich 355 eines Schachtes 356 eingegeben, und die flüssigen Bestandteile, wie Gülle, gelangen aus der Leitung 357 über die Ventile 358 und das hieran anschließende Rohr 359 zum Düsenkopf 360, durch den die flüssigen Bestandteile gemäß Pfeilrichtung 361 herausgespritzt werden und hierbei auf die organischen Massen treffen und sich mit ihnen zum größten Teil vermischen. Flüssigkeitsmengen, die hierbei nicht von den organischen Massen aufgenommen werden, fallen auf die von der vorhergehenden Füllung eingegebene Rottemasse 15, die durch die gleiche Einfüllart, z.B. am vorhergehenden Tag, verhältnismäßig trocken ist. Durch die herabfallenden Flüssigkeitsmengen wird also die bereits früher eingebrachte Rottegutportion in erforderlicher Weise gesättigt, was auch dadurch begünstigt wird, daß diese obere Rottemassenschicht bereits erwärmt ist und somit eine erhöhte Quellfähigkeit vorliegt.

Zur Begrenzung der Wurf-und Spritzwirkung des Zyklons bzw. der Düsen der organischen Massen sowie der Gülle können die Schächte bis zur Decke voneinander getrennt ausgeführt sein, oder es können hierfür Begrenzungslappen 362 vorgesehen sein.

Nach der Füllung, bei der die Verteilung des frisch eingegebenen Rottegutes auf die Schachtbreite nicht genügend gleichmäßig ist, wird zweckmäßigerweise mit dem Mischwinkel bzw. dem Mischwinkelprofil die Rottemasse mehrmals hintereinander aufgelockert, wodurch sie sich auf die Breite verteilt, insbesondere, wenn die bereits beschriebenen Abstreicheinrichtungen 287 vorgesehen sind.

Es kann auch so vorgegangen werden, daß je Verrottungsanlage ein oder eine Vielzahl nebeneinanderliegender Zyklone 352 über die jeweiligen Schachteinmündungen 336 durch Verfahren gebracht wird, wobei die Zyklone 352 mit kurzen Schachtaustrittsstutzen bzw. ihren Austrittstrichtern 364 in die Schachteinmündungen abgesenkt werden.

## Ansprüche

1. Verfahren zur Verrottung von organischen Abfallprodukten, wie tierischen Fäkalien, menschlichen Exkrementen, Pflanzenabfällen und dergleichen, bei gleichzeitiger Wärmegewinnung, wobei diese Stoffe in schütt-und gasaustauschfähiger Struktur vorliegen bzw. in eine solche gebracht werden und bei dem diese infolge ihrer Schwerkraft selbsttätig schrägliegende Schächte durchlaufen und durch mechanische Auflockerungseinrichtungen durchgemischt werden und eine im Kreislauf umgewälzte Prozeßluft eingesetzt wird, dadurch gekennzeichnet, daß

a) jedem Schacht (9, 10, 214, 215, 246, 295, 340) das einzubringende frische Rottegut (15) separat und dosiert zugeführt wird, entweder in aufbereitetem, vermischtem Zustand oder durch gleichzeitiges zusammenbringendes Einblasen und Einspritzen der organischen bzw. flüssigen Bestandteile, wie gemahlenem Stroh und der Gülle, oberhalb eines jeden Schachtbereiches,

b) das abgeschlossen behandelte Rottegut (15) jedem Schacht (9, 10, 214, 215, 246, 295, 340) gesondert entnommen wird,

c) die Prozeßluft in das Rottegut (15) entweder seitlich in den freien Raum (33, 180) der Mischwinkel (27, 126, 126a, 170, 206, 207) hinter deren Vorderwand (125, 141) oder bei an Schwenkeinrichtungen (242) angeschlossenen Mischwinkelprofilen (241, 272) über diese die Prozeßluft zugeführt wird,

d) mit der oberhalb des Rottegutes (15) abgesaugten Prozeßluft die Temperatur im Rottestapel durch Entnahme oder Zuführung von Wärmeenergiemengen geregelt wird.

2. Einrichtung zur Durchführung des Verfahrens nach Anspruch 1, dadurch gekennzeichnet, daß über dem Anfang eines Schachtes (9, 10, 215, 246, 295) entweder ein Einfüll-Sammelschacht (11, 12, 318) zur Aufnahme einer Füllmenge des Rottegutes (15) vorgesehen ist, der unten durch dichtende und zu öffnende Böden oder Schieber (20, 22, 316) abgeschlossen ist, oder daß hier ein Breitverteiler (13) für das einzubringende Rottegut (15) vorgesehen ist, dem dasselbe von einem Mischer (16) über Rohrleitungen (14) zugeführt wird, wobei der Einfüll-Sammelschacht (318) mit einer Mischeinrichtung (319) und/oder einer Glattstreicheinrichtung (320) sowie diese mit einem Auswurfschacht (324) ausgerüstet sein kann, oder daß das Rottegut (15) durch einen Sammel-und Beschickungsbehälter (325) mittels einer Transporteinrichtung (327, 335) über Schachteinmündungen (336) eingebracht werden kann.

3. Einrichtung zur Durchführung des Verfahrens nach Anspruch 1, dadurch gekennzeichnet, daß in eine Schachteinmündung (355) ein an sich bekannter Zyklon (352) einragt, dem die organische Masse durch Einblasen über Leitungen (351) tangential zugeführt wird, und das Zubringen der Flüssigkeit, wie Gülle, über ein den Zyklon (352) zentrisch durchtretendes Rohr (359) einem unterhalb des Austrittes für die organische Masse, gemäß Pfeilrichtung (354), liegenden Düsenkopf (360) erfolgt, wodurch diese in austretender Richtung, gemäß Pfeilrichtung (361), in die ausströmende Masse eingespritzt wird, und die Schachteinmündung (355) Begrenzungslappen (362) oder -wände (363) aufweist, wobei ein Zyklon (352) in mehrere Schachteinmündungen (355) bedarfsweise eingebracht werden kann.

4. Einrichtung zur Durchführung des Verfahrens nach Anspruch 1, dadurch gekennzeichnet, daß das untere Ende eines Schachtes (9,10) von einer Trennwand (35, 115, 229) und einer anschließenden, in der Stellung zum Schachtende in Verlängerung zur Trennwand (35, 115, 229) verschwenkbaren Klappe (36, 117, 230) abgeschlossen wird und die Trennwand (35, 115, 229) mit ihrer Klappe (36, 117, 230) so weit in dem Schacht (9, 10, 215) vor dem unteren Kettenrad (38) liegt, daß ein an einem Kettentrieb (39) angeschlossener Mischwinkel (27) in einem vom Rottegut (15) freien Raum umkehrt und dann zum Eintritt in den Schacht (9, 10) die Klappe (36, 117, 230) gegen das Rottegut (15) verschwenkt, wobei unterhalb der Klappe (36, 117, 230) innerhalb des Kettentriebs (39) eine Gutaustragseinrichtung (40), gebildet durch eine nach oben offene Mulde (84) und ein Schneckenwerkzeug (42), vorgesehen ist, die durch die Seitenwand (3) nach außen führt und dort von einem Gehäuse (44), das unten durch eine Tür (45) verschließbar ist, umgeben ist.

5. Einrichtung zur Durchführung des Verfahrens nach Anspruch 1, dadurch gekennzeichnet, daß ein Boden (7) eines Schachtes (9) in Stahlkonstruktion (28, 29, 31, 32, 113) erstellt ist, wobei jeweils außen ein Freiraum für Ketten (92) eines Kettentriebs (39) vorgesehen ist und der Boden (7) unter einem Winkel α etwa 20 - 30 ° zur Horizontalen liegt.

6. Einrichtung zur Durchführung des Verfahrens nach Ansprüchen 1 und 5, dadurch gekennzeichnet, daß innerhalb des Kettentriebs (39) Kettenspanneinrichtungen (94 - 98; 101 - 105) vorgesehen sind.

7. Einrichtung zur Durchführung des Verfahrens nach Anspruch 1, dadurch gekennzeichnet, daß ein Boden (8) in seiner Winkellage β etwa von 18 - 28° verstellbar ist, wozu dieser einmal unten um eine Schwenkachse (70) gelagert ist, die durch am Boden (8) in I-Träger (28) eingeschweißte Bolzen (71) und zugehörige Lagerböcke (72) gebildet wird und zum anderen im oberen Bereich seitlich an je einer Augenschraube (74) aufgehangen ist, deren Länge durch Muttern (75), die auf der Oberwand (4) über Kugelunterlegscheibenpaare (76) aufliegen, eingestellt wird, wobei die Gutaustragseinrichtung (40) eine äußere Lagerung (81) aufweist, die an Streben (82), welche an der Mulde (84) anschließen, gehaltert ist.

8. Einrichtung zur Durchführung des Verfahrens nach Anspruch 1, dadurch gekennzeichnet, daß ein Mischwinkel (27) im Anschluß an seine Vorderwand (51), von seiner oberen Kante (53) ausgehend, ein abfallend angeordnetes Abdeckblech (54) aufweist, wobei ein Abstreifer (49), dessen Schwenkachse (52, 167) auf der Mittellinie oder tiefer des Kettentriebes (39, 169) liegt, auch auf dem Abdeckblech zur Wirkung kommt.

9. Einrichtung zur Durchführung des Verfahrens nach Anspruch 1, dadurch gekennzeichnet, daß an einer Seitenwand (3) oder an beiden Seitenwänden (3) schmale, etwa in Höhe des Mischwinkels (27) ausgebildete Prozeßluftkanäle (57) mit Austrittslöchern (58) vorgesehen sind und an ihm eine Abdeckung (112) anschließt, die die Verbindung Lagerauge (119) und Lagerrohr (123) der Kette (92) schützt, wobei die Grundplatte (118) des Mischwinkels (27) mit Spiel die Verbindung umschließt und der Mischwinkel (27) in seiner Formgebung ebenfalls mit geringem Spiel der Außenform des Preßluftkanals (57) und der Abdeckung (112) angepaßt ist.

10. Einrichtung zur Durchführung des Verfahrens nach Anspruch 1 und 7, dadurch gekennzeichnet, daß der Boden (8) außen oberhalb des Bodengleitblechs (32) einen Luftkanal (135) entweder mit nach innen liegenden Löchern (136) ausgeführt ist oder daß der Luftkanal (135) im zur Seite des Rottegutes (15) liegenden Schenkel (137) einen durchgehenden Schlitz (138) aufweist, der von innen am Schenkel (137) angebrachten und sich überlappenden Dichtprofilen (139) für den Ruhebetrieb geschlossen wird und von einem an einem Mischwinkel (126A) angebrachten abgeflachten Rohrstück (149), das durch Eintreten zwischen die Dichtprofile (139) in den Luftkanal (135) hineinragt, geöffnet wird.

11. Einrichtung zur Durchführung des Verfahrens nach Anspruch 1, dadurch gekennzeichnet, daß die Winkellage des Winkels des Mischwinkels (126) verstellbar ist, z.b. durch eine Vielzahl von Spannschlössern (127), die zwischen der Grundplatte (118) und dem Stirnblech (125) angeordnet sind, wobei das Stirnblech (125) aus solch verhältnismäßig dünnem und elastischem, vorzugsweise nicht rostendem Werkstoff besteht, daß durch die Verstellung keine bleibende Verformung bzw. kein Bruch des Stirnbleches (125) eintritt, oder daß eine Vorderwand (141) vorn scharnierartig um einen Bolzen (142) im Bereich des Lagerteils einer Spitze (143) anschließt und auch der Mischwinkel (140) im oberen Bereich (144) seiner Vorderwand (141) konkav geformt ist und an seiner Hinterseite ein angepaßtes Abdeckblech (146) aufweist, das verstellbar angeschlossen ist.

12. Einrichtung zur Durchführung des Verfahrens nach Anspruch 1, dadurch gekennzeichnet, daß wärmeisolierte Rohrkanäle (178) an der Außenseite der Seitenwände (3) angeordnet sind und von ihnen aus durch die Seitenwände (3) eine solche Vielzahl von Zuführlöchern (174) in Höhe des vorbeiziehenden Mischwinkels (170) vorgesehen sind, die in einem solchen Abstand (179) liegen, daß stets mindestens ein Loch (174) in den Innenraum (180) des Mischwinkels (170) mündet, wobei die Lochmündung einen Konus (183) aufweisen kann und die Zuführlöcher (174) mit einem innen glatten Rohr (187) z.B. aus Kunststoff, ausgekleidet sein können.

13. Einrichtung zur Durchführung des Verfahrens nach Anspruch 1, dadurch gekennzeichnet, daß eine obere Welle (150) des Kettentriebes (169) durch Langlöcher (160) der Seitenwände (3) austritt, die Gehäuse (153) der Lagerungen (151, 152) dieser Welle von außen auf einer Verstellplatte (154) und diese auf einer Grundplatte (155), die an den Seitenwänden (3) fest angeordnet ist, aufliegen und diese Teile über Schrauben (158), die in ein Anzugsteil (157) eingeschraubt sind und das von innen gegen die Grundplatte (155) anliegt, gegeneinander angeklemmt werden, wobei in der Grundplatte (155) Langlöcher (159) für die Schrauben (158) zum Freigang der Nachstellbarkeit des Kettentriebes (169) vorgesehen sind und das Nachstellen nach Lösen der Schrauben (158) durch Drehen der am Auge (164) der Grundplatte (155) anliegenden Mutter um eine auf Verdrehen in seinem Lager der Verstellplatte (154) gesicherten Gewindestange (162) erfolgt und die Langlöcher (159) stets von der Verstellplatte (154) abgedeckt werden.

14. Einrichtung zur Durchführung des Verfahrens nach Anspruch 1, dadurch gekennzeichnet, daß Zuführlöcher (190) für die Prozeßluft der Seitenwände (3) von außen durch im Luftkanal (204) - schwenkbar angeordnete Abdichtklappen (191) abgedeckt sind, wobei diese und außerhalb des Kanals (204) liegende Schalthebel (196) drehfest auf einer gleichen Welle (192) anschließen, die Schalthebel (196) durch einen Mitnehmer (197) eines außenliegenden Kettentriebes (198), der von einem Kettenrad (201), das drehfest an der Welle (150) des Kettentriebes (169) anschließt und sich mit letzterem sychron bewegt, dann verschwenkt werden, wenn der innere Freiraum (33, 180) eines Mischwinkels (27, 140, 170) sich auf der Höhe der Zuführlöcher (190) befindet, wobei durch die Form des Mitnehmers (197) die Abdichtklappe (191) so lange in geöffneter Position verbleibt, bis der innere Freiraum des Mischwinkels (27, 140, 170) das jeweilige Zuführloch (190) oder auch erforderlichenfalls eine entsprechende Vielzahl Zuführlöcher (191) verlassen hat, wonach die Abdichtklappe (191) dann von einer Zugfeder (199) wieder in die Verschlußposition gegen einen Anschlag (200) gebracht wird.

15. Einrichtung zur Durchführung des Verfahrens anch Anspruch 1, dadurch gekennzeichnet, daß die Ketten (208) der Triebe zur Bewegung von Mischwinkeln (206, 207) in Schächten (214, 215) über Kettenräder (209 - 213) so gelenkt werden, daß die Mischwinkel (206, 207) im oberen Freiraum der Schächte (214, 215) zurückgeführt werden, wobei eine Trennwand (227) sowohl hinter den unteren Kettenrädern (211, 213) liegen kann und der Mischwinkel (206) mit seinen außen liegenden Führungsstücken (218) bei der unteren Umkehrung im Rottegut (15) durch Führungsleisten (217) so gesteuert wird, daß er nicht mit der Schnecke (216) der Gutaustrageinrichtung (40) kollidiert, als auch so vorgegangen werden kann, daß eine Trennwand (229) mit nach unten anschließender Klappe (230) im Sinne der Bewegung des Mischwinkels (207) vor dem Kettenrad (212) vorgesehen ist, wobei die Schnecke (216) im Anschluß an die Trennwand (229) und die Klappe (230) angeordnet ist und die Kettenräder (209, 313) sowie die Ketten (208) durch Abdeckprofile (221) geschützt sind, die im Bereich der Bewegung der Mischwinkel (206, 207) über dem Boden (222) an der Seitenwand als Luftzuführkanäle (223) mit Löchern 224 ausgebildet sind.

16. Einrichtung zur Durchführung des Verfahrens nach Anspruch 1, dadurch gekennzeichnet, daß ein hohles Mischwinkelprofil (241) in Breite des Schachtes (246) als untere Verbindung einer Schwenkeinrichtung (242) vorgesehen ist, wobei das Mischwinkelprofil (241) durch äußere schmale Wangen (243) und diese an einer Schwenkachse (244) angebracht sind und die Schwenkeinrichtung (242) an einem Fahrgestell (247) im oberen Bereich des Schachtes (246) angeschlossen und verfahrbar ist, womit das Mischwinkelprofil (241) über dem Boden (261)des Schachtes (246) bewegt wird, in der Stellung des oberen Schachtendes in den oberen freien Raum des Schachtes (246) verschwenkt, in dieser Position zum Schachtende zurückbewegt wird und hier wieder in das Gut bis zum Boden (261) eingeschwenkt, wobei die Prozeßluft über angeschlossene Leitungen (245) und die hohlen Wangen (243) oder hinter ihnen vorgesehene Leitungen dem Mischwinkelprofil zugeführt wird und durch die Senklöcher (234) der Unterseite (274) austritt, und die vorderen Kanten der Wangen (243), die mit geringem Spiel nahe der Innenseite (270) der Außenwände (3) liegen, mit einer Schräge (271), die nach innen verläuft, spitz ausgeführt sind und der Schacht (246) unten durch eine Trennwand (255), die dem Kreisbogen (254) des verschwenkenden Mischwinkelprofils (241) formmäßig angepaßt ist, abschließt sowie an die Trennwand (255) unten eine gutaustragende Schneckeneinrichtung (267) anschließt.

17. Einrichtung zur Durchführung des Verfahrens nach Ansprüchen 1, 15 und 16, dadurch gekennzeichnet, daß die Schwenkeinrichtung (242) an einem Fahrgestell (247) angeordnet ist, dessen Rollen (248) außen in den Seitenwänden (3) eingebrachten Schienen (249) laufen, wobei der Antrieb für das Fahrgestell (247) entweder über ein Motor-Getriebeaggregat (250) des Fahrgestells (247), das mit seinen Wellen (251) und mit ihnen verbundenen Zahnritzeln in im Bereich der Schienen (249) vorgesehene Zahnstangen eingreift, oder daß der Antrieb des Fahrgestells durch andere, bereits vielfach bekannt gewordene Mittel, wie Ketten-oder Seilzüge, erfolgt, deren Antriebsaggregate sowohl auf dem Fahrgestell (247) oder an den Schachtwänden angeordnet sein können bzw. daß das Fahrgestell (247) durch Gewindespindeleinheiten hin-und herbewegt wird.

18. Einrichtung zur Durchführung des Verfahrens nach Ansprüchen 16 und 31, dadurch gekennzeichnet, daß am Fahrgestell (247) vorn in Breite des Schachtes (246) eine Abstreicheinrichtung (287) vorgesehen und für den Rücklauf ausschwenkend angeordnet ist.

19. Einrichtung zur Durchführung des Verfahrens nach Anspruch 1, 16, 17, 18, dadurch gekennzeichnet, daß die untere Trennwand (339) des Schachtes (340) mit ihrer Oberfläche (347) dem Kreisbogen (346) des herunterschwenkenden Mischwinkelprofils (241) gegenüber etwas vorsteht und beim Herabschwenken um die Achse (341) gegen die Wirkung einer Feder (348) zurückschwenkt.

20. Einrichtung zur Durchführung des Verfahrens nach den Ansprüchen 1 und 16, dadurch gekennzeichnet, daß für eine Vielzahl von Schächten (295, 296) einer Verrottungsanlage (294) eine einzige Schwenkvorrichtung (242) vorgesehen ist, die an einem Teleskopgestänge (97) - schwenkbar angeordnet ist, welches an einer Verfahreinrichtung (298), die unter der Oberwand (4) plaziert ist, anschließt und mit der diese Einrichtung in die jeweilige Position (299, 300) zum Einfahren in den betreffenden Schacht (297) gefahren wird, um dann durch das Ausfahren des Teleskopgestänges (297) die Schwenkvorrichtung und anschließend das Mischwinkelprofil (241) in die Ausgangsposition (293) zu bringen, wobei durch das Einziehen des Teleskopgestänges (297) das Mischwinkelprofil (241) in die obere Endposition (292) gelangt, um anschließend in eine hochliegende Position (312) zu schwenken, in der das Mischwinkelprofil (241) zum Einfahren in einen anderen Schacht gebracht werden kann, ohne mit Hindernissen,wie Rottegut (15), Wänden (313), zu kollidieren, wobei das Teleskopgestänge (297) vorn auf jeder Seite eine überstehende Rolle (304) trägt und das Rahmenteil (301, 311) über eine Schwenkachse (302) an der Verfahreinrichtung (298) angeordnet und in eine abgefederte sowie gering höhere Stellung,als es der zugehörigen Lage zur Unterseite (305) des Bodens (306), an dem die Rolle (304) anläuft, entspricht, eingestellt wird, wobei im Boden (306) zusätzlich ein Schlittenteil (309) eingelassen und am Teleskopgestänge (297) ein dieses umfassendes Führungsteil (308) vorhanden ist und zum sicheren Einlaufen die vorderen Partien dieser Profile angespitzt ausgeführt sind.

21. Einrichtung zur Durchführung des Verfahrens nach den Ansprüchen 1 und 16, dadurch gekennzeichnet, daß ein einziges Mischwinkelprofil (241) und die zugehörige Schwenkeinrichtung (242) an einem Fahrsatz angeordnet sind, der unter Zuhilfenahme eines in die Seitenwände (3) eingelassenen Schienen-und Weichensystems bedarfsweise in die einzelnen Schächte und von dort aus wieder herausgefahren wird.

Fig.1

0 241 802

Fig. 2

Fig. 3

Fig. 4

Fig.6

Fig.8

Fig.5

Fig.7

*Fig.9*

*Fig.13*

*Fig.14*

Fig. 10

Fig. 12

Fig. 11

Fig. 15

Fig. 16

0 241 802

Fig. 17

Fig. 18

0 241 802

Fig. 19

Fig. 22

Fig. 21

0 241 802

Fig.20

Fig.24

Fig.23

Fig.26

Fig.25

294

298

4

311

310

301

303

299

302

300

312

314

292

297

313

307

315

R

15

~ 295 ~

R ~ 295 ~

316

305

~ 295 ~

304

306

242

~ 295 ~

306

309

306

308

241/293

0 241 802

0 241 802

*Fig.28*

*Fig.27*

318

320

S

322A  322

324

319

316  T

T

S

*Fig.30*

338  242

260  347

241  339

341

345

346

347

342  343  267 344

Fig.29

# Fig.31

# Fig.32